# EUROPÄISCHE PATENTSCHRIFT

(11) **EP 0 910 829 B1**
(45) Veröffentlichungstag und Bekanntmachung des Hinweises auf die Patenterteilung: **03.03.2004**
(21) Anmeldenummer: 97931718.7
(22) Anmeldetag: 08.07.1997
(51) Int. Cl.: G06F 17/30

(54) **DATENBANKSYSTEM**
DATABASE SYSTEM
SYSTEME DE BANQUE DE DONNEES

(30) Priorität: 08.07.1996 DE 19627472
(43) Veröffentlichungstag der Anmeldung: 28.04.1999
(73) Patentinhaber: SER Systeme AG Produkte und Anwendungen der Datenverarbeitung, 53577 Neustadt (DE)
(72) Erfinder: REINHARDT, Gert, J., D-53577 Neustadt (DE)
(74) Vertreter: Betten & Resch
(86) Internationale Anmeldenummer: PCT/DE1997/001441
(87) Internationale Veröffentlichungsnummer: WO 1998/001808

(56) Entgegenhaltungen:
- EP-A- 0 320 266
- GB-A- 2 172 130

## Beschreibung

Die Erfindung betrifft ein Datenbanksystem, insbesondere ein Datenbanksystem, bei dem eine Datenbasis, die aus einer Vielzahl von Datensätzen besteht, gespeichert wird, ein Verfahren zur Speicherung, Änderung und Anzeige der Datenbasis, sowie ein Verfahren zur Suche in der bzw. zum Zugriff auf die Datenbasis.

Ein Datenbanksystem besteht in der Regel aus einem Datenbestand, der sogenannten Datenbasis, die in einem maschinenlesbaren Speicher abgespeichert wird, sowie aus einem EDV-System, auf dem eines oder mehrere Anwendungsprogramme ablaufen, um über ein Kontrollprogramm, das sogenannte. Datenbank-Management-System, auf die Datenbasis zuzugreifen, Bestandteile der Datenbasis anzuzeigen, nach Bestandteilen zu suchen, sowie um die Datenbasis zu modifizieren, neue Daten einzugeben, usw.

Die Interpretation der Daten in der Datenbasis erfolgt über die Metadaten, "Daten über die Daten", die das Datenbank-Management-System gesondert benötigt bzw. abspeichert. Die Metadaten sind also Beschreibungsdaten zu den Feldern des Datensatzes und aller sonstiger Attribute des Datenbanksystems.

Bei bekannten Datenbanksystemen wird dabei die Datenbasis in strukturierter Form abgespeichert, gemäß dem Stand der Technik in Tabellenform. Ein solches Datenbanksystem ist beispielweise bekannt aus "An Introduction to Database Systems " C.Y. Date, sixth edition, ISBNO-201-54329-X, Seiten 62-65. Die Datenbasis besteht dabei aus einzelnen Datensätzen, die wiederum aus einzelnen Datenfeldern bestehen. Speicherung in strukturierter Form ist immer dann gegeben, wenn sich die Informationen in Datensätze bestehend aus mehreren Feldern unterteilen lassen, wobei die Bedeutung des n-ten Feldes in jedem Datensatz identisch ist. Die Inhalte der Felder können unterschiedlich sein.

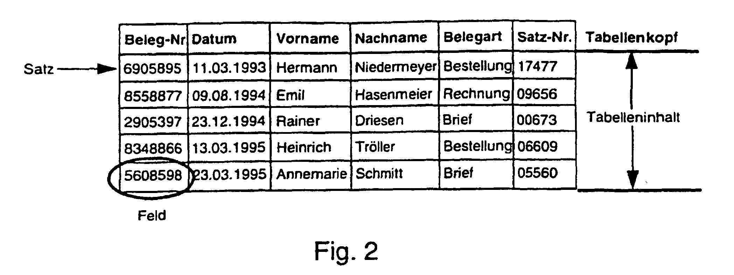

Ein Beispiel für einen Teil einer solchen strukturierten Datenbasis in Tabellenform ist in Fig. 2 dargestellt.

Die einzelnen Datensätze sind die Zeilen der Tabellen, in denen jeweils in einzelnen Datenfeldem Informationen über Beleg-Nr., Datum, Vorname, Nachname, und Belegart enthalten sind. Das letzte Feld jedes Datensatzes enthält eine Satz-Nr., d.h. eine Identifikationsnummer zur eindeutigen Identifikation des Datensatzes. Alle Datensätze weisen nicht nur die gleiche Anzahl von Datenfeldern auf; die Datenfelder jedes Datensatzes lassen sich auch in eine allen Datensätzen gemeinsame Struktur einordnen.

So enthält jeder Datensatz ein Feld mit der Deskription bzw. Bezeichnung Beleg-Nr., eines mit dem Datum, eines mit dem Vornamen, etc. Die individuellen Datensätze sind in einer Tabelle zusammengefaßt, deren Spalten durch eine gemeinsame Deskription ihres Inhalts gekennzeichnet sind. Die Struktur der Tabelle ist also vorgegeben, und zwar durch die Deskriptionen, die im Tabellenkopf der Tabelle aus Fig. 2 vorhanden sind. Die Felder des Tabellenkopfes enthalten weitere nicht dargestellte Informationen über den Inhalt der einzelnen Spalten der Tabelle, sogenannte Metadaten für die jeweiligen Felder der Datensätze der Tabelle. Grundsätzlich werden bei herkömmlichen Datenbanksystemen Daten der Datenbasis in derart strukturierter Form abgespeichert, d.h. es wird eine Tabellenstruktur vorgegeben, der die abzuspeichernden Datensätze bezüglich Feldanzahl und Deskription des Feldinhalts, aber auch bezüglich des Datentyps bzw. der Datenstruktur des Feldinhalts, entsprechen müssen.

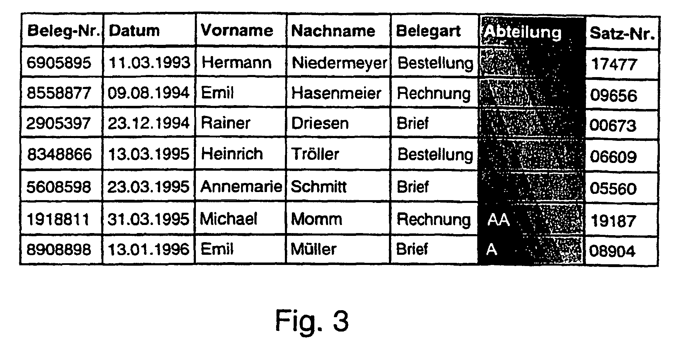

Durch die vorgegebenen Struktur, mit der die Daten abgespeichert werden, ist es bei herkömmlichen Datenbanksystemen im Falle einer Struktur gemäß Fig. 2 nicht ohne weiteres möglich, zusätzliche Informationen, die nicht dieser Struktur entsprechen, abzuspeichern. Sollen z.B. für lediglich einzelne Datensätze zusätzliche Informationen abgespeichert werden, so muß die Struktur der gesamten abgespeicherten Daten geändert werden. Ein Beispiel hierfür ist in Fig. 3 dargestellt.

Zur zusätzlichen Abspeicherung eines Abteilungskennzeichens muß, selbst wenn diese Information lediglich für einzelne Datensätze abgespeichert werden soll, eine zusätzliche Spalte "Abteilung" in die Tabelle eingefügt werden.

Bei herkömmlichen Datenbanksystemen wird also eine Struktur vorgegeben, an die die einzelnen Datensätze gebunden sind, und die individuellen Datensätze werden dann zu einer Tabelle wie in Fig. 2 oder in Fig. 3 gezeigt zusammengefaßt. Die Feldinhalte der einzelnen Datensätze sind damit durch die Gesamtstruktur der Tabelle, die aus den Datensätzen gebildet wird, bezüglich ihrer Deskription, aber auch bezüglich ihres Datenformats vorgegeben. Die Inhalte der einzelnen Felder der Datensätze können bezüglich ihrer Deskription, ihres Datenformats, also bezüglich ihrer Metadaten, nur durch eine Änderung der Struktur der Gesamttabelle geändert werden. Eine solche Änderung in der Struktur der Gesamttabelle, etwa die Änderung der Tabelle aus Fig. 2 in die aus Fig. 3, beeinflußt jedoch die Struktur sämtlicher auch der bereits vorhandenen Datensätze.

Die zu einer Tabelle zusammengefaßten Datensätze werden als Datenbanktabelle bezeichnet, die Summe der Metadaten aller Datenbanktabellen der Datenbasis, die im einzelnen unterschiedlich sein können, bilden das sogenannte Datenmodell des Datenbanksystems.

Diese Art von strukturierter Abspeicherung der Daten bedeutet, daß für jede Ablage von Datensätzen vorausgesetzt wird, daß die Datensätze, die abzulegen bzw. abzuspeichem sind, in der Struktur zumindest mit einer Teilstruktur der Datenbank übereinstimmen.

Soll also ein Datensatz abgespeichert werden, der in der Struktur nicht den vorhandenen Datenstrukturen bzw. Teilen davon entspricht, so muß die Datenbank um das neue Strukturelement (Feld/Felder) erweitert werden, bevor der Datensatz gespeichert werden kann.

Die aus diesen Tabellen resultierende Datenstruktur wird nicht nur in der Datenbasis gebildet, sondern auch im Datenbank-Management-System und in den Anwendungsprogrammen abgebildet. Daraus resultieren folgende grundsätzliche Probleme.

Änderungsanforderungen bezüglich der Datenstrukturänderungen kommen von den Anwendem und werden damit zuerst an die Anwendungs-Software gestellt. Daraus ergibt sich jedoch dann auch eine Änderung des Datenmodells der Datenbank. Des weiteren müssen die Änderungen der Anforderungen vom Anwender definiert werden und haben bei der Realisierung Änderungen im Datenbank-Management-System zur Folge, da dieses an die Struktur der Datenbasis angepaßt werden muß. Dadurch degenerieren die Datenstrukturen im Lauf der Zeit. Z.B. kann es vorkommen, daß beim Einfügen neuer Spalten nicht alle Felder der Spalte beschrieben werden, wodurch letztlich einige Felder der Gesamttabelle, die aus den einzelnen Datensätzen gebildet wird, leer bleiben.

Ein besonderes Problem stellt die Speicherung von Datensätzen mit einer neuen Datensatz-Struktur dar. Diese Datensatz-Struktur muß vom Anwender definiert werden. Auch hierfür sind Änderungen im Datenbank-Management-System und in den Anwendungsprogrammen nötig.

Aus der strukturierten Speicherung der Daten in Tabellenform ergibt sich also ein hoher Aufwand für den Systemadministrator als Resultat der Anforderungen, die von den Anwendern der Datenbank gestellt werden. Die Struktur der Datenbasis muß ständig geändert und angepaßt werden.

Bei herkömmlichen Datenbanksystemen sind die Datensätze in Tabellenform geordnet. Ein Datensatz selbst besteht dabei aus mehreren Datenfeldem. Jedes Datenfeld besteht aus einem Deskriptor und einem Feldwert (Feldinhalt). Der Deskriptor beschreibt hierbei den Feldwert. Der Deskriptor beschreibt die Felder nach der Art bzw. der Bedeutung ihres Feldwertes. So haben z.B. alle Datenfelder, deren Feldinhalt aus einer Körpergröße besteht, denselben Deskriptor. Aus diesen strukturierten Datensätzen wird dann die in Tabellenform strukturierte Datenbasis modelliert. Diese herkömmliche Vorgehensweise setzt gesicherte oder hypothetische Informationen über die Struktur der zu speichernden Datensätze voraus. Diese Informationen werden benötigt, um das Datenmodell zu definieren, das die Speicherung aller Datensätze ermöglicht, die aufgrund der vorliegenden Informationen potentiell gespeichert werden müssen. Es werden dann zur Speicherung der in der Regel inhomogenen Gesamtmenge aller erwartenden Datensätze Datenbanktabellen definiert, wobei jede Datenbanktabelle nur Datensätze gleicher Struktur speichert. Die Summe aller Definitionen aller benötigten Datenbanktabellen bildet das abstrakte Datenmodell des Datenbanksystems.

Es versteht sich, daß das Datenmodell jeder Datenbanktabelle alle Datenfelder aller potentiell in dieser Datenbanktabelle zu speichernden Datensätze insbesondere hinsichtlich ihres Datenformats berücksichtigen muß. Hierzu werden für jeden potentiell in einem Datensatz vorkommenden Deskriptor die Attribute beschrieben. Attribute beschreiben dabei das Datenformat und die Verwendung (z.B. "Indizierung" oder "keine Indizierung") des Feldwertes. Damit ist die so definierte Datenbanktabelle in der Lage, Datensätze zu speichern, die der vordefinierten Struktur entsprechen. Dieses Datenmodell kann dann visualisiert werden, indem jeder Spalte der Datenbanktabelle ein Deskriptor zugeordnet wird. Ein Datensatz entspricht dann einer Zeile in dieser Datenbanktabelle. In jeder Spalte wird der dem Deskriptor zugeordnete Feldwert eingetragen, sofern der Datensatz einen entsprechenden Feldwert enthält. Nicht in jedem Datensatz muß notwendigerweise für jeden Deskriptor ein Feldwert existieren. Dies führt dann zu leer bleibenden Datenfeldem in der Datenbanktabelle.

Diese Speicherung von Datensätzen in einem so aufgebauten Datenbanksystem hat den Nachteil, daß zunächst ein Datenmodell definiert werden muß, das jeden potentiell in einem Datensatz vorkommenden Deskriptor sowie dessen Datenformat berücksichtigt. Ein solches Datenmodell kann jedoch nur erstellt werden, wenn vollständige und korrekte Informationen über die Struktur der erwarteten Datensätze vorliegen. Diese Vorbedingung kann nur selten erfüllt werden.

Die bei einer Problemanalyse erhobenen Informationen können in der Regel die tatsächlich zu speichernden Datensätze nicht vollständig beschreiben. Durch die Definition eines Datenmodells muß abstrahiert werden, d.h. es werden vereinfachende Annahmen getroffen, die möglicherweise zu einem unvollständigen Datenmodell führen. Dieses unvollständige Datenmodell muß dann unter Umständen später modifiziert, erweitert, vereinfacht oder auf eine sonstige Weise geändert werden. Weiterhin werden bei einer Problemanalyse nicht notwendigerweise alle das Datenmodell beeinflussenden Aspekte erfaßt. Auch hierdurch entsteht ein unvollständiges Datenmodell.

Eine weitere Ursache für ein unvollständiges Datenmodell betrifft die notwendigerweise statische Natur des Datenmodells selbst. Liegen zu einem bestimmten Zeitpunkt vollständige Informationen über die Struktur der zu erwartenden Datensätze vor, dann kann ein vollständiges Datenmodell entwickelt werden. Häufig ändern sich jedoch die dem Datenmodell zugrundeliegenden Informationen im Laufe der Zeit, wodurch dann wieder ein unvollständiges Datenmodell entsteht.

Die sich aus einem unvollständigen Datenmodell ergebenden Systemmängel resultieren in Änderungsanforderungen der Anwender. Diese Änderungsanforderungen der Anwender haben dann eine vom Systemadministrator/Programmierer zu leistende Nachbesserung des Datenmodells zur Folge. Dieses nachgebesserte Datenmodell ist dann unter Umständen wieder unvollständig, so daß wieder nachgebessert werden muß.

Ein bisher verfolgter Ansatz, den sich ergebenden Aufwand zu minimieren, ist die Einführung einer möglichst komfortablen und mächtigen Entwicklungsumgebung (z.B. 4GL-Sprache). Änderungen im Datenbank-Management-System können dann mit geringem Aufwand durchgeführt werden.

Das grundsätzliche Problem der bisherigen Lösungsansätze bleibt jedoch gleich: Es muß ein statisches Datenmodell definiert werden, das im Laufe der Zeit durch sich immer wiederholende Änderungen an die Anforderungen der Anwender angepaßt werden muß. Diese sich wiederholenden Änderungen führen langfristig zu einer Degeneration des Datenmodells und sind vom Standpunkt der Systempflege aus betrachtet zwar automatisierbar, jedoch nicht geeignet, das Problem an sich zu beheben.

Es ist daher eine Aufgabe der vorliegenden Erfindung, ein Verfahren zu schaffen, mit dem die Daten der Datenbasis optimal gespeichert werden können. Weiterhin soll auf diese Datenbasis schnell zugegriffen werden können, und die Daten der Datenbasis sollen angezeigt und gegebenenfalls auf einfache und flexible Art und Weise modifiziert werden können.

Der Kern der Erfindung besteht nun darin, daß bei der Speicherung einer Datenbasis auf die Bildung eines strukturierten Datenmodells für die Datenbasis verzichtet wird, und daß stattdessen die Datenbasis auf eine Art und Weise abgespeichert wird, die die Definition eines Datenmodells für den Zweck der Speicherung in dem Datenbanksystem nicht mehr erfordert. Weder manuell, noch durch einen automatisch ablaufenden Algorithmus werden Datenmodelle für das Datenbanksystem erstellt.

Dies geschieht dadurch, daß bei jeder Speicherung eines Datensatzes vollständige Informationen über die Struktur des Datensatzes mit dem Datensatz zusammen abgespeichert werden. Das heißt, jeder Datensatz enthält zusätzlich zu den Nutzdaten eine vollständige Beschreibung der Struktur des Datensatzes. Damit wird die Speicherung des Datensatzes unabhängig von einem übergeordneten Datenmodell, da der Datensatz nicht an die Struktur eines bestehenden bzw. vorgegebenen Datenmodells angepaßt sein muß. Jeder Datensatz enthält seine vollständigen Metadaten, die eine vollständige Beschreibung des Datensatzes beinhalten. Dadurch entfallen die Beschränkungen, die sich dadurch ergeben, daß beim herkömmlichen Datenbanksystem gleichartige Datensätze zu Tabellen zusammengefaßt werden, wodurch dann ein Datenmodell vorgegeben wurde, an das neu einzugebende Datensätze angepaßt sein müssen. Jeder Datensatz ist bezüglich seiner Struktur völlig unabhängig von den anderen abgespeicherten Datensätzen und die Definition eines übergeordneten Datenmodells entfällt damit.

Das Fehlen eines übergeordneten Datenmodells, bei dem mehrere Datensätze gleicher Struktur zusammengefaßt sind, führt dazu, daß der Verwaltungsaufwand für die abgespeicherten Daten deutlich reduziert wird. So muß das Datenbank-Management-System nicht ein übergeordnetes Datenmodell abbilden und muß dementsprechend nicht an ein geändertes übergeordnetes Datenmodell angepaßt werden, falls Änderungen bzw. neue Abspeicherungen neuer Strukturen vorgenommen wurden. Bei der erfindungsgemäßen Datenbank gibt es keine übergeordnete Struktur mit mehreren zusammengefaßten Datensätzen, sondern lediglich eine Minimalstruktur, die aus dem individuellen Datensatz selbst besteht, der gleichzeitig eine vollständige Beschreibung (Metadaten) dieses Datensatzes bzw. seiner Struktur enthält. Jeder Datensatz besteht aus einer beliebigen Anzahl von Feldern, wobei nun allerdings im Gegensatz zur herkömmlichen Datenbank jedes Feld eines Datensatzes der erfindungsgemäßen Datenbank zusätzlich zu den ggf. mehreren Feldinhalten eine vollständige Beschreibung der Feldinhalte (Metadaten) enthält.

Jedes Feld kann mehrere Feldinhalte aufweisen, wobei dann die Feldbeschreibung sämtliche Feldinhalte hinsichtlich ihres Formats vollständig beschreibt. Insbesondere kann ein erster Feldinhalt aus Nutzdaten bestehen, während ein zweiter Feldinhalt desselben Feldes aus einem Deskriptor besteht, der die Nutzdaten hinsichtlich ihrer Bedeutung kennzeichnet. Die Feldbeschreibung enthält dann die Attribute sowohl für die Nutzdaten als auch für den Deskriptor, also für beide Feldinhalte. Die Attribute beschreiben dabei die einzelnen Feldinhalte bezüglich ihrer Datenstruktur, d.h. z.B. bezüglich ihres Datentyps und ihrer Länge in Bytes. Sie können auch festlegen, ob es sich um einen Deskriptor oder um Nutzdaten handelt. Gundsätzlich ist die Anzahl der Feldinhalte eines Feldes beliebig, entscheidend ist die Tatsache, daß die Feldbeschreibung die Attribute für alle Feldinhalte enthält. Welcher von ggf. mehreren Feldinhalten nun letzlich aus Nutzdaten besteht und welcher aus einem Deskriptor für einen bzw. mehrere aus Nutzdaten bestehende Feldinhalte, kann dabei ebenfalls in der Beschreibung festgelegt werden. Diese Frage kann jedoch auch einfach durch Konvention bezüglich der Reihenfolge festgelegt werden, etwa in der Art, daß jeder zweite Feldinhalt immer aus einem Deskriptor für den vor ihm angeordneten Feldinhalt besteht.

Es versteht sich, daß einzelne Feldinhalte auch leer bleiben können, obwohl sie in der Feldbeschreibung als Teil des Feldes definiert sind. Grundsätzlich sind bei der vorliegenden Erfindung die Feldinhalte eines Feldes bezüglich ihrer Anzahl, noch bezüglich ihres Formats durch eine übergeordnete Struktur festgelegt. Format und Anzahl der Feldinhalte wie auch die Frage, ob es sich bei den Feldinhalten um Nutzdaten oder um Deskriptoren handelt, können für jedes Feld jedes Datensatzes in beliebiger Weise frei gewählt werden, da die Feldbeschreibung das Feld bezüglich dieser Festlegungen durch die in der Feldbeschreibung enthaltenen Attribute vollständig beschreibt. Damit ergibt sich eine Symmetrie oder Dualität zwischen Deskriptoren und Nutzdaten beim Aufbau eines Datenfeldes uind somit auch beim Aufbau eines Datensatzes. Diese Dualität oder Symmetrie kann sich fortsetzen, indem Nutzdaten und Deskriptoren auch in der weiteren Verarbeitung der Datensätze bzw. der einzelnen Datenfelder, d.h. bei der Indizierung von, bei der Suche nach, beim Zugriff auf Felder oder Datensätze, bei der Präsentation und bei der Modifikation von Feldern oder Datensätzen gleich behandelt werden können. In diese Gleichbehandlung können selbst Teile der Feldbeschreibung miteinbezogen werden, die dann in ähnlicher Weise wie die Feldinhalte verarbeitet werden.

Bei der erfindungsgemäßen Datenbank gibt es keine übergeordnete Struktur zur Speicherung gleichartiger Datensätze, sondern lediglich eine nicht weiter zu vereinfachende Minimalstruktur zur Speicherung der Felder, bestehend aus den Metadaten des Feldes und aus den Feldinhalten, die jeweils Nutzdaten oder Deskriptoren sein können. Jeder Datensatz besteht aus einer beliebigen Anzahl von Feldern. Die Deskriptoren der Felder eines Datensatzes müssen nicht notwendigerweise eindeutig sein. Mehrfachnennungen können in der erfindungsgemäßen Datenbank einfach abgebildet werden, indem mehrere Felder mit gleichem Deskriptor in einem Datensatz gespeichert werden.

Ein Deskriptor gibt einem zugehörigen, aus Nutzdaten bestehenden Feldinhalt eine semantische Bedeutung, d.h. er kennzeichnet den aus Nutzdaten bestehenden Feldinhalt hinsichtlich seiner Bedeutung. Bei der erfindungsgemäßen Datenbank wird jedoch der aus einem Deskriptor bestehende Feldinhalt im Prinzip genauso behandelt wie der aus Nutzdaten bestehende Feldinhalt, d.h. beide können aus beliebigen Bitfolgen beliebigen Formats bestehen, da ihr Format bzw. ihre Struktur in der jeweiligen Feldbeschreibung definiert ist. Für das erfindungsgemäße Datenbanksystem spielt es bei der Verarbeitung von Feldinhalten zunächst keine Rolle, ob es sich bei dem Feldinhalt um Nutzdaten, etwa um eine Bitfolge zur Darstellung eines Bildes, oder um einen Deskriptor handelt, welcher die Bitfolge zur Darstellung eines Bildes hinsichtlich ihrer Bedeutung als "Bild" kennzeichnet. Sowohl der Nutzdatenwert als auch der Deskriptor können im Prinzip aus beliebigen Bitfolgen bestehen. Erst wenn die Daten dem Benutzer angezeigt werden sollen, muß das Anwendungsprogramm zwischen Deskriptor und Nutzdatenwert unterscheiden, damit der Benutzer erkennt, ob es sich um einen reinen Nutzdatenwert handelt, oder um Informationen, welche einen Nutzdatenwert (bzw. eine Nutzdatenbitfolge) hinsichtlich ihrer Bedeutung kennzeichnen. Es ist deshalb zwar erforderlich, daß auf irgendeine Weise festgelegt wird, ob es sich bei einem Feldinhalt um reine Nutzdaten oder um einen Deskriptor handelt, abgesehen von dieser Festlegung ist jedoch jeder Feldinhalt in seiner Struktur beliebig und muß lediglich durch die Feldbeschreibung in ausreichender Weise definiert werden.

Bei der Verarbeitung der erfindungsgemäß abgespeicherten Datensätze ist es also weitgehend gleichgültig, ob es sich bei den zu verarbeitenden Feldinhalten um Nutzdaten handelt, oder um Deskriptoren, welche andere Feldinhalte hinsichtlich ihrer Bedeutung kennzeichnen. Alle Feldinhalte können bei dem erfindungsgemäßen Datenbanksystem im wesentlichen gleich verarbeitet werden, und insbesondere auf gleiche Weise indiziert werden.

Auch hierarchische Strukturen in einem Datensatz können abgebildet werden, indem in einem Datensatz sowohl Felder als auch Subdatensätze eingestellt werden. Die Subdatensätze können ihrerseits wieder aus Feldern und weiteren Subdatensätzen bestehen. Auf der untersten Hierarchieebene besteht jedoch ein Subdatensatz ausschließlich aus Feldern. Damit besteht ein hierarchischer Datensatz letztendlich nur aus Feldern, die in der nicht weiter zu vereinfachenden Minimalstruktur (der erfindungsgemäßen Datenbank) gespeichert werden können.

Die Speicherung der in einem Datensatz enthaltenen Felder erfolgt für die zum Index gehörenden Felder zweifach. Zunächst wird der Datensatz als Ganzes in einem strukturlosen Speicher (dem Datensatzbereich) unter einer eindeutigen Datensatznummer gespeichert. Ein im Datensatzbereich gespeicherter Datensatz enthält damit sowohl die Metadaten als auch die Feldinhalte, welche Nutzdaten, Deskriptoren, oder Deskriptoren von Deskriptoren sein können. Alle oder ausgewählte Felder werden zusätzlich in einem der universellen Minimalstruktur entsprechenden Speicher (Indexbereich) gespeichert. Die Minimalstruktur besteht aus dem Deskriptor, dem Nutzdatenwert, der Satz-Nr.(über die der gesamte Datensatz referierbar ist, bzw. die Felder mit gleicher Satz-Nr. im Index zusammengeführt werden können), sowie einem Kennzeichen für den Zugriffsschutz (UIP genannt).

Der Indexbereich dient hierbei als Zugriffspfad auf den Datensatzbereich, indem der vollständige Datensatz gespeichert ist. Im Indexbereich müssen deshalb nicht notwendigerweise alle Informationen gespeichert werden, sondern nur die Informationen, die für den Zugriff auf den Datensatzbereich erforderlich sind. Insbesondere müssen nicht alle im Deskriptor enthaltenen Informationen in den Indexbereich eingestellt werden.

Um einen schnellen Zugriff auf den Datenbereich zu ermöglichen, ist der Indexbereich meist nach dem Nutzdatenwert sortiert. Es können jedoch zusätzliche Sortierungen sinnvoll sein, etwa nach Teilen des Deskriptors. Die erfindungsgemäße Datenbank ermöglicht dem entsprechend nicht nur einen Zugriff über die Nutzdatenwerte, sondern auch über die Deskriptoren auf die Datensätze.

Die in der universellen Minimalstruktur eines Feldes enthaltene Dualität von Nutzdatenwert und Deskriptor wird damit auch für den Zugriff auf die gespeicherten Datensätze genutzt.

In einer weiteren speziellen Ausführungsform kann die aus Datensatzbereich und Indexbereich bestehende Datenbasis in Unterdatenbestände aufgeteilt werden, um die Verwaltung des gegebenenfalls sehr großen Datenbestandes zu vereinfachen. Eine solche Aufteilung kann aufgrund des Feldinhaltes spezieller Felder erfolgen.

In einer weiteren speziellen Ausführungsform erfolgt die Unterteilung der Datenbasis gemäß dem Erstellungszeitpunkt eines Datensatzes. Damit kann eine zeitlich endlos wachsende Datenbasis realisiert werden.

In einer weiteren speziellen Ausführungsform enthält die Feldbeschreibung Informationen über den Datentyp, die Länge der Daten sowie darüber, ob es sich bei dem betreffenden Feldinhalt um Nutzdaten oder um einen Deskriptor handelt. Die dabei pro Feld abgespeicherten Attribute beziehen sich sowohl auf die Feldinhalte bestehend aus Nutzdaten als auch auf die aus Deskriptoren bestehenden Feldinhalte. Damit ist es insbesondere möglich, daß die Felddeskriptionen auch wie Nutzdaten interpretiert werden können. Dieser Datensatz wird dann als Ganzes unter einer Datensatznummer in einem Speicher abgespeichert, wobei die Datensatznummer ein ausgezeichneter Feldinhalt eines Feldes des Datensatzes ist, und dieser Feldinhalt dadurch ausgezeichnet ist, daß die Deskription "Datensatznummer" nur für ein einziges Feld in dem Datensatz vorkommt.

Die Feldbeschreibung kann gegebenenfalls noch weitere Informationen enthalten, etwa über den Schutzstatus sowohl der Nutzdaten als auch der Deskriptoren, d.h. über die Zugriffsrechte auf diese Daten. Die Nutzdaten der einzelnen Felder der Datensätze werden dann zusammen mit der Datensatznummer und dem jeweiligen Deskriptor, gegebenenfalls noch mit weiteren zusätzlichen Informationen wie dem Schutzstatus als Tupel in einer einzigen logischen Liste gespeichert. Diese logische Liste wird nach mindestens einem Kriterium sortiert und dient dann als Gesamt-Index für den Zugriff auf die Sätze der Datenbank. Dieser Gesamt-Index wird dabei über mindestens die aus Nutzdaten bestehenden Feldinhalte, gegebenenfalls zusätzlich über die Deskriptoren indiziert. Ober diesen einfach oder zweifach indizierten Gesamt-Index wird dann der Zugriff auf bzw. die Suche nach einzelnen Nutzdaten bzw. Deskriptoren ermöglicht. Die einfache oder zweifache Indizierung der Liste kann auch für weitere Informationen erweitert werden, indem Teile der Feldbeschreibungen (z.B. der Datentyp) auch indiziert werden, so daß dieser auch als direktes Zugriffskriterium zur Verfügung steht. Die Abspeicherung von Informationen über den Schutzstatus einzelner Felder (UIP User Information Protection) ermöglicht dabei den Schutz einzelner Felder (Nutzdaten und Deskriptor) vor dem Zugriff durch nicht zugriffsberechtigte Benutzer bereits auf der Feld- bzw. Deskriptor-Ebene.

In einer weiteren speziellen Ausführungsform kann der indizierte Gesamt-Index in Teil-Indices aufgeteilt werden. Dadurch wird eine Aufteilung des gegebenenfalls sehr großen Datenbestandes in leichter zu verwaltende Unterdatenbestände möglich, die eine externe Bezeichnung erhalten können.

In einer weiteren speziellen Ausführungsform erfolgt die Unterteilung des Gesamt-Index in Teil-Indices gemäß dem Zeitraum der Erstellung und/oder Nutzung durch den Anwender, die gegebenenfalls in den Informationen über den Schutzstatus als Teil der Feldbeschreibung mit abgespeichert wird.

Durch das Indizieren nicht nur der aus Nutzdaten bestehenden Feldinhalte, sondern gegebenenfalls auch der Deskriptoren und/oder Teilen der Feldbeschreibung in der linearen Liste ermöglicht die erfindungsgemäße Datenbank die Präsentation der und den Zugriff auf bzw. die Suche nach den Feldbeschreibungen auf dieselbe Weise wie für die Nutzdaten und die Deskriptoren.

Erfindungsgemäß wird also jeder Datensatz einzeln zusammen mit Informationen über seine Struktur abgespeichert. Zusätzlich werden ausgezeichnete (ggf. auch alle) Felder des so abgespeicherten Datensatzes in einer Liste indiziert. Es erfolgt also eine teilweise redundante Abspeicherung der Daten, einmal als gesamter strukturierter Datensatz, und ein zweitesmal als einzelne Felder (auszugsweise oder vollständig) in der indizierten Liste. Bei der zweiten Abspeicherung der Felder des Datensatzes in einer Liste kann durch die Feldbeschreibung festgelegt werden, welche Felder, welche Feldinhalte, ggf. auch welche Teile der Feldbeschreibung indiziert werden sollen. Diese Festlegungen sind dabei ebenfalls in der Feldbeschreibung abgespeichert.

Die Tatsache, daß die strukturierten Datensätze ebenfalls abgespeichert werden, heißt jedoch nicht, daß ein Datenmodell gebildet werden muß. Jeder strukturierte Datensatz wird für sich, unabhängig von den zusätzlich in der Datenbasis vorhandenen Datensätzen, abgespeichert. Damit kann jeder Datensatz Felder mit Daten beliebigen Formats enthalten, da er von den anderen Datensätzen unabhängig ist.

Die vorliegende Erfindung wird nachfolgend unter Bezugnahme auf die Zeichnungen anhand von mehreren Ausführungsbeispielen im Detail beschrieben.
Es zeigen:
Fig. 1 eine allgemeine Darstellung eines Datenbanksystems;
Fig. 2 eine Datenbanktabelle einer konventionellen Datenbank;
Fig. 3 eine modifizierte Datenbanktabelle einer konventionellen Datenbank;
Fig. 4a einen Datensatz beliebiger Struktur, wie er in einer Datenbank gemäß der vorliegenden Erfindung abgespeichert wird;
Fig. 4b eine Datenbanktabelle beliebiger Struktur, wie sie sich aus den Datensätzen gemäß Fig. 4a ergibt;
Fig. 5a und 5b die Linearisierung einer Datenbanktabelle einer Datenbank gemäß der vorliegenden Erfindung; wobei in

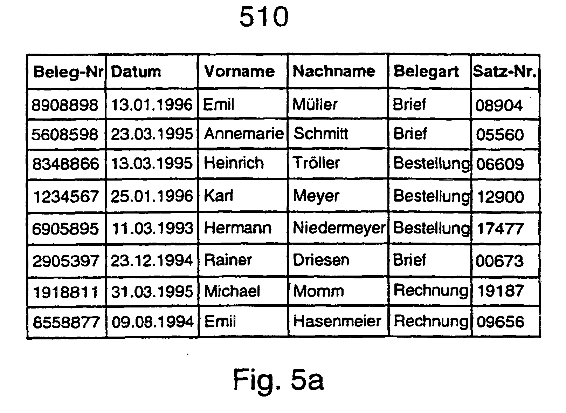

Fig. 5a eine Datenbanktabelle und in

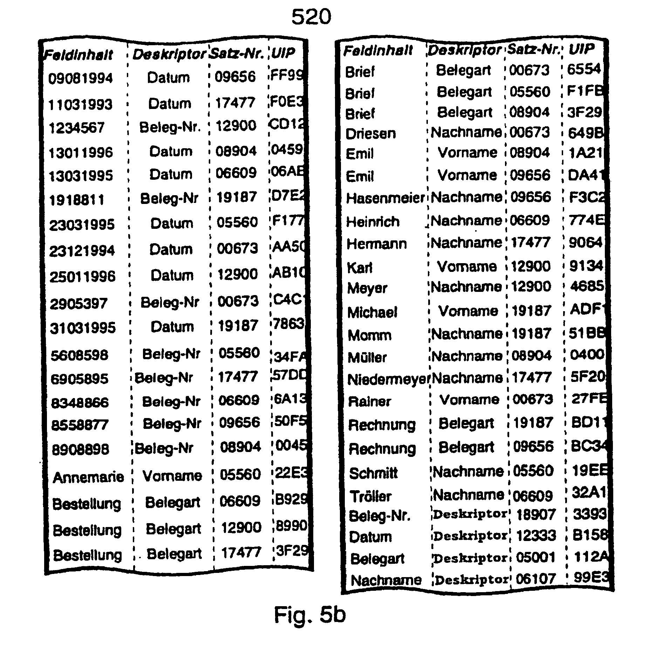

Fig. 5b ein Gesamt-Index dargestellt sind;

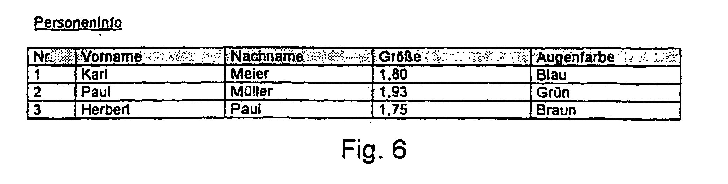

Fig. 6 eine Datenbanktabelle einer konventionellen Datenbank;

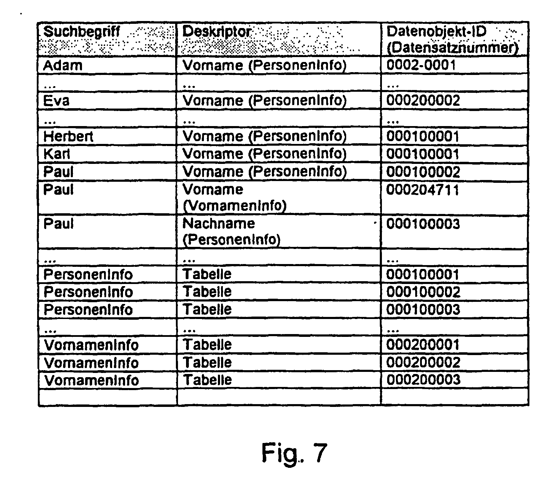

Fig. 7 eine Gesamt-Index einer Datenbank gemäß der vorliegenden Erfindung;

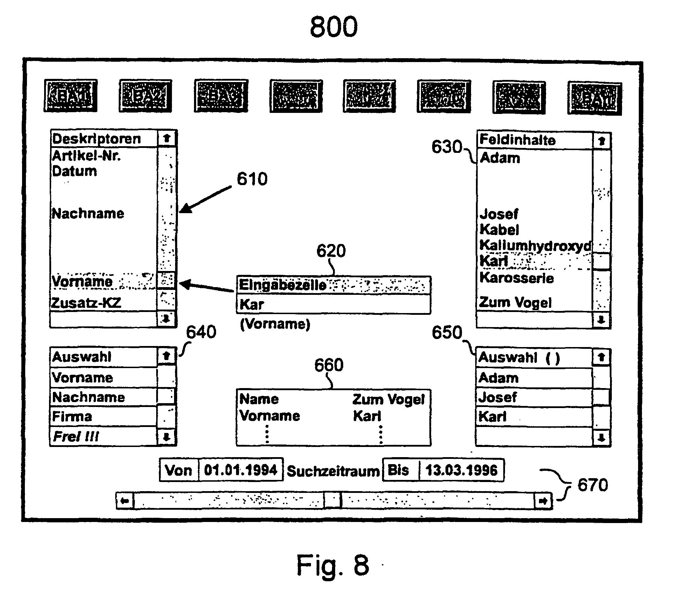

Fig. 8 eine Eingabemaske zur Durchführung einer Recherche in einer Datenbank gemäß der vorliegenden Erfindung;

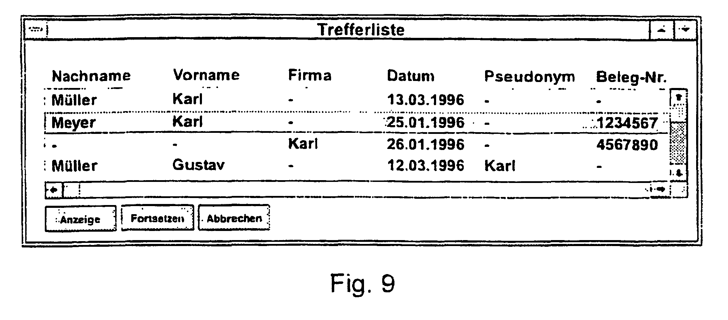

Fig. 9 ein Resultat einer Recherche in einer Datenbank gemäß der vorliegenden Erfindung für eine Suche ohne Angabe eines Deskriptors;

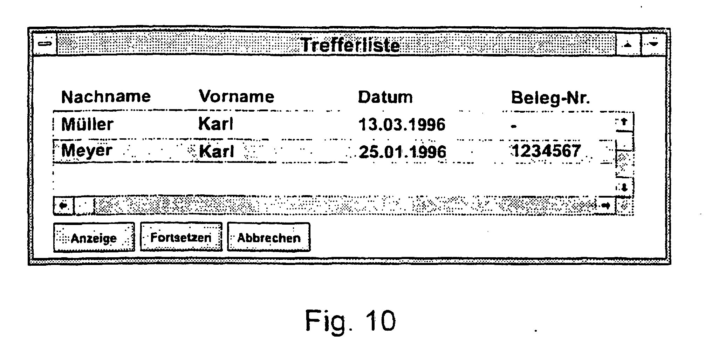

Fig. 10 ein Resultat einer Recherche in einer Datenbank gemäß der vorliegenden Erfindung bei einer Recherche mit Angabe eines Deskriptors;

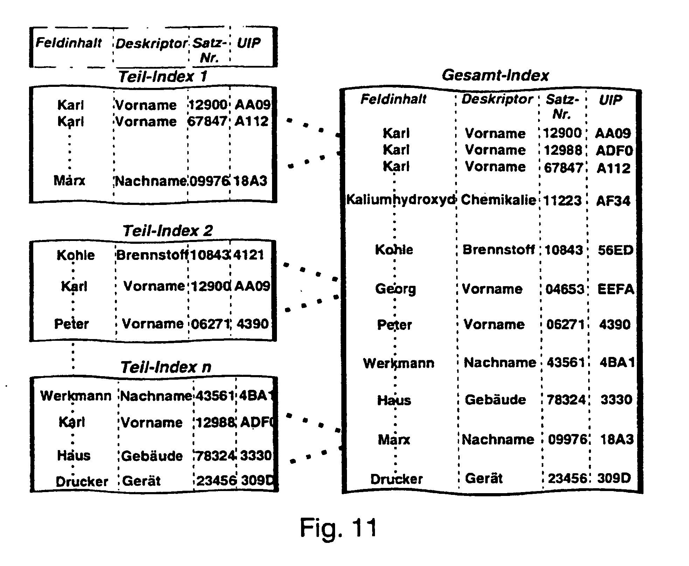

Fig. 11 die Unterteilung des Gesamt-Index in Teil-Indices.

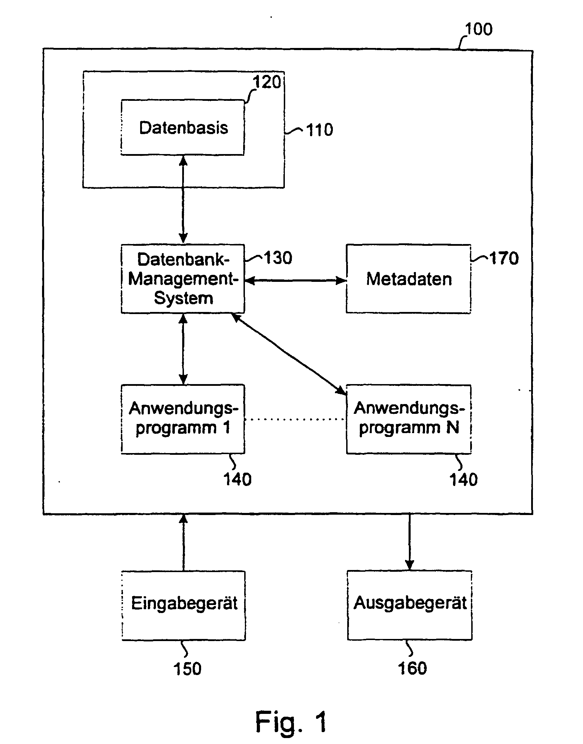

In Fig. 1 ist ein Datenbanksystem schematisch dargestellt, das mittels einer EDV-Anlage 100 realisiert ist. Hierzu ist in einem maschinenlesbaren Speicher 110 eine Datenbasis 120, in der die Daten abgelegt werden, abgespeichert, und verschiedene Anwendungsprogramme 140 können über ein Kontrollprogramm 130, das Datenbank-Management-System, auf die Datenbasis 120 zugreifen. Das Kontrollprogramm 130 und die Anwendungsprogramme 140 laufen dabei auf einer oder mehreren EDV-Anlagen 100 ab. Das Auffinden, Speichern, Modifizieren und Suchen von Daten der Datenbasis geschieht dabei durch die Anwendungsprogramme 140 über das Kontrollprogramm 130. Der Benutzer kann mittels eines Eingabegeräts 150 oder eines Ausgabegeräts 160 auf die Daten zugreifen, Daten eingeben oder die Ausgabe von Daten veranlassen. Die eigentliche Datenbank besteht dabei aus der Datenbasis 120 und dem Datenbank-Management-System 130. Ein übergeordnetes Datenmodell 170 ist durch Metadaten vorgegeben und gibt eine Struktur für die in der Datenbasis abgespeicherten Daten vor.

Die Daten der Datenbasis sind in Datensätze untergliedert, wobei die einzelnen Datensätze jeweils aus einer beliebigen Anzahl von Feldern bestehen. In dieser Form werden die Datensätze in dem Speicher 110 abgespeichert, der ein beliebiger maschinenlesbarer Speicher sein kann.

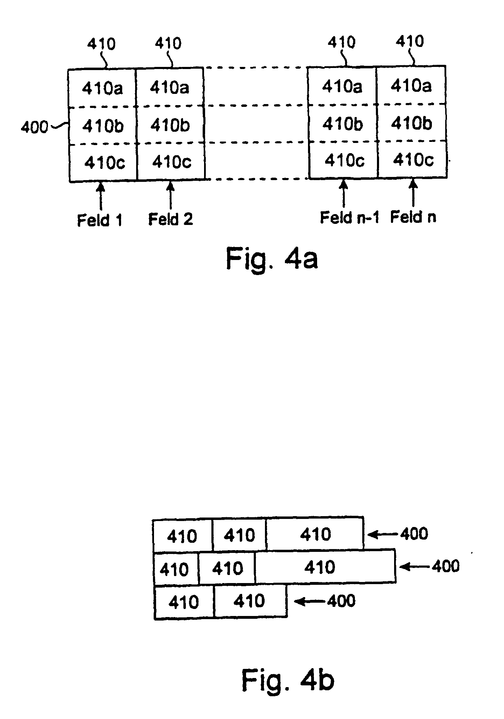

Erfindungsgemäß wird in einem ersten Ausführungsbeispiel jeder Datensatz in einer Form, wie sie in Fig. 4a dargestellt ist, abgespeichert.

Jeder abgespeicherte oder abzuspeichemde Datensatz 400 besteht dabei aus einer beliebigen Anzahl von Feldern Feld 1, Feld 2, ..., Feld n, die mit 410 gekennzeichnet sind und jeweils in einen Deskriptor als Feldinhalt 410a, eine Feldbeschreibung 41 0b, die Attribute enthalten kann, und einen Feldinhalt 41 0c als Nutzdaten unterteilt sind. Die Feldbeschreibung 410b enthält Informationen über den Datentyp, die Länge der Daten und gegebenenfalls die UIP (User Information Protection). Damit ist jeder Datensatz 400 durch die mit ihm bzw. mit jedem Feld 410 abgespeicherte Beschreibung vollständig definiert und von den anderen abgespeicherten bzw. abzuspeichemden Datensätzen in seiner Struktur völlig unabhängig. Im Extremfall kann somit jeder Satz der in der Datenbank abgespeicherten Datensätze unterschiedlich lang sein und unterschiedliche Feldbeschreibungen/Deskriptoren haben. So kann z.B. ein Datensatz als Nutzdaten des Feldes 2 Bilddaten enthalten, welche durch die Feldbeschreibung und den Deskriptor des Feldes 2 aus Fig. 4a genauer definiert werden, während ein anderen Datensatz im Feld 2 z.B. Textdaten, Zahlenangaben, oder ähnliches als Nutzdaten enthalten kann, was ebenfalls wiederum durch die Feldbeschreibung und ggf. den Deskriptor des entsprechenden Feldes 2 definiert ist und durch den Deskriptor hinsichtlich der Bedeutung beschrieben wird. Es entfällt damit ein übergeordnetes Datenmodell, bei dem Datensätze gleicher Struktur zusammengefaßt werden.

Entscheidend ist, daß sowohl der als Deskriptor dienende Feldinhalt 410a als auch der aus Nutzdaten bestehende Feldinhalt 410c nicht durch eine übergeordnete Struktur festgelegt wird, sondern lediglich durch die Attribute, die in der Feldbeschreibung 410b enthalten sind. Daraus ergibt sich eine gewisse Dualität zwischen Feldinhalten mit Deskriptorcharakter und aus Nutzdaten bestehenden Feldinhalten, d.h. bei der weiteren Behandlung der so abgespeicherten Feldinhalte können Deskriptor und Nutzdaten völlig gleich behandelt werden. Dies ist insbesondere wichtig, wenn die derart abgespeicherten Datensätze indiziert werden, um eine Liste aus Suchbegriffen zu erstellen. Die Dualität bzw. Äquivalenz der Feldinhalte, unabhängig davon, ob es sich um Deskriptoren oder um Nutzdaten handelt, führt dazu, daß bei der späteren Indizierung der einzelnen Felder von Datensätzen nicht nur über die Nutzdaten, sondern auch über die Deskriptoren indiziert werden kann.

Es versteht sich, daß bei entsprechender Feldbeschreibung der Feldinhalt 410c selbst wiederum ein Datensatz sein kann, oder aber auch ein Zeiger auf einen Datensatz. Im Prinzip kann auch ein sonstiges sogenanntes BLOB (Binary Large Object) als Nutzdaten oder als Deskriptor abgespeichert werden, das dann durch die entsprechende Feldbeschreibung bezüglich seines Formats und gegebenenfalls bezüglich seiner Eigenschaft als Deskriptor oder Nutzdaten definiert ist.

Der so aufgebaute Datensatz 400 wird dann unter einer eindeutigen Datensatznummer in einem maschinenlesbaren Speicher abgespeichert. Die Datensatznummer ist beispielsweise der Feldinhalt 410b eines ausgezeichneten Feldes, das dadurch ausgezeichnet ist, daß lediglich für ein Feld des Datensatzes der Deskriptor auf "Datensatznummer" lautet.

In der beschriebenen Form, bestehend aus Beschreibung und Inhalt, wird also jeder Datensatz abgespeichert und ist anhand seiner eindeutigen Datensatznummer identifizierbar. In diesem Aufbau tritt er auch dem Benutzer bei einem Aufruf wieder entgegen, vorausgesetzt der Benutzer hat das Zugriffsrecht für alle Felder des Datensatzes.

Durch die beschriebene Abspeicherung jedes Datensatzes, zusammen mit seiner Beschreibung, ergibt sie bei der erfindungsgemäßen Datenbank somit keine Datenbanktabelle vorgegebener Struktur wie bei herkömmlichen Datenbanken, sondern die Summe aller abgespeicherten Datensätze ergibt bei der erfindungsgemäßen Datenbank eine Datenbanktabelle beliebiger Struktur, wie sie in Fig. 4b mit drei beliebig langen Datensätzen 400 angedeutet ist. Insbesondere kann jedes Feld auch eine beliebige Anzahl von Feldinhalten aufweisen.

Die Feldbeschreibung 410b enthält dabei verschiedene Attribute, im ersten Ausführungsbeispiel neben Informationen über Datentyp und Länge der Feldinhalte, sowie der Bezeichnung der Feldinhalte (Nutzdaten oder Deskriptor), auch Informationen über den Schutzstatus, den Ersteller des Feldes, das Datum des Kreierens des Feldes und das Datum der letzten Referenz auf das Feld sowie weitere optionale Informationen (UIP User Information Protection) des Feldes, d.h. insbesondere über die Zugriffsberechtigung auf das Feld für die Benutzer. Diese Informationen in der Feldbeschreibung können sich auch jeweils auf individuelle Feldinhalte beziehen. Insbesondere können auch Informationen in der Feldbeschreibung darüber gespeichert werden, ob das betreffende Feld oder auch einzelne Feldinhalte des betreffenden Feldes bei einer Indizierung indiziert werden sollen. Darin wird gespeichert, ob überhaupt, und wenn ja für wen, eine Zugriffsberechtigung auf die Nutzdaten und/oder den Deskriptor besteht. Die UIP kann auch Informationen darüber enthalten, ob überhaupt das Feld als Ganzes bei einem Zugriff auf den Datensatz nach außen hin für bestimmte Benutzer in Erscheinung treten soll, d.h. ob ein bestimmter Benutzer überhaupt erkennen kann, daß ein solches Feld existiert. Wird z.B. in der UIP ein bestimmtes Feld als lediglich für bestimmte Nutzer erkennbar beschrieben, so können andere Benutzer bei einem Zugriff auf den Datensatz gar nicht erkennen, daß der Datensatz ein solches Feld enthält. Selbstverständlich kann die UIP solche Zugriffsinformationen auch für Nutzdaten und Deskriptor getrennt speichern, so daß z.B. zwar erkannt werden kann, daß der Deskriptor existiert, jedoch auf die Nutzdaten nicht zugegriffen werden kann. Die Feldbeschreibung kann auch Angaben darüber enthalten, ob ein Feld bei der Bildung eines Index indiziert werden soll oder nicht. Auch kann festgelegt werden, welche Feldinhalte und ggf. welche Teile der Feldbeschreibung indiziert werden sollen.

Neben diesen Informationen über Zugriffsberechtigungen können in der Feldbeschreibung 410b bzw. der UIP auch beliebige weitere Informationen gespeichert werden, die entweder den Datensatz als Ganzes oder den Inhalt einzelner Felder betreffen, z.B. Informationen über Zugriffszeiten oder Zugriffshäufigkeiten auf den Datensatz als Ganzes oder auf Teile des Datensatzes, auf einzelne Felder oder einzelne Feldinhalte. Allgemein kann die UIP beliebige Verwaltungsinformationen zum Feld enthalten. Es können beispielsweise auch Informationen über das Datum bzw. die Zeit der Herstellung einzelner Felder oder einzelner Feldinhalte, oder auch des ganzen Datensatzes abgespeichert werden.

Entscheidend ist, daß der Datensatz eine in sich selbst geschlossene und von anderen Datensätzen unabhängige Struktur bildet, die aus Feldern besteht, wobei jedes Feld aus einer vollständigen Beschreibung der Feldinhalte sowie den Feldinhalten besteht, wobei die Feldinhalte aus Nutzdaten oder aus Deskriptoren der Nutzdaten bestehen können.

Die aus solchen beliebig strukturierten Datensätzen zusammengesetzte Datenbanktabelle (siehe Fig. 4b) beliebiger Struktur wird nun linearisiert. Linearisierung heißt dabei erneutes Abspeichern der einzelnen als Index-Felder ausgezeichneten Felder, bzw. der Feldinhalte und/oder gegebenenfalls von Teilen der Feldbeschreibung mit der jeweils gemeinsamen Satz-Nr., um so eine Liste von Zugriffsbegriffen zu erhalten, nach denen eingeordnet und gesucht werden kann. Dabei werden die Feldinhalte der einzelnen Felder und gegebenenfalls Teile der Feldbeschreibung zusammen mit der Datensatznummer als n-Tupel (minimal n = 4) erneut abgespeichert. Die Gesamtheit dieser n-Tupel bildet dann eine logische Liste aller Zugriffsbegriffe. Entscheidend ist dabei, daß sowohl die Feldinhalte selbst als auch gegebenenfalls Teile der Feldbeschreibung, falls diese bei der Linearisierung verwendet werden sollen, bei dieser Linearisierung gleichbehandelt werden. Das heißt, sowohl der/die Feldinhaft/e selbst als auch eventuell Teile der Feldbeschreibung können als Suchbegriff in der logischen Liste dienen, indem ein Index über jede der Spalten der n-Tupel gebildet wird.

Dabei werden zu jedem eingetragenen Feldinhalt der logischen Liste ein Deskriptor und die jeweilige Datensatznummer (Satz-Nr.), Informationen bezüglich des Formats sowie die UIP gespeichert. Fig. 5 zeigt eine solche Umwandlung einer Datenbanktabelle 510 (Fig. 5a) in einen Gesamt-Index 520 (Fig. 5b). Der Gesamt-Index wird aus der logischen Liste durch Indizierung über die in der logischen Liste als n-Tupel abgespeicherten Felder erfolgt dabei, wie man aus Fig. 5b erkennt, nicht nur über die aus Nutzdaten bestehenden Feldinhalte, sondern auch über die aus Deskriptoren bestehenden Feldinhalte. So tauchen die aus Deskriptoren bestehenden Feldinhalte Beleg-Nr., Datum, etc. ebenfalls als Suchbegriffe im Gesamt-Index auf. Neben diesen Deskriptoren könnten nun auch noch weitere Teile der Feldbeschreibung indiziert werden, die dann ebenfalls im Gesamt-Index als Suchbegriffe oder Zugriffsbegriffe auftauchen würden. So könnte hier beispielsweise auch die Länge der Datensätze als Ganzes als Suchbegriff im Gesamt-Index auftauchen. Im Prinzip kann bei der Indizierung über jeden Teil der Feldbeschreibung indiziert werden, sofern dies gewünscht wird. Dazu werden dann bei der Bildung der logischen Liste die Teile der Feldbeschreibung, über die indiziert werden soll, als Feld des aus einem Datensatz gebildeten n-Tupels abgespeichert.

Die Erstellung des Gesamt-Index wurde hier über den Zwischenschritt der Erstellung einer logischen Liste aus den einzelnen Datensätzen bzw. den einzelnen Felder der Datensätze beschrieben. Der Gesamt-Index kann jedoch auch ohne diesen Zwischenschritt direkt aus beliebig strukturierten Datensätzen gemäß Fig. 4b erstellt werden. Dabei kann die Feldbschreibung Informationen darüber enthalten, was nun bei der Bildung des Gesamt-Index alles indiziert werden soll. Durch diese Informationen können einzelne Datensätze, einzelne Felder, ja selbst einzelne Feldinhalte von der Indizierung ausgeschlossen werden. Ferner können bei Vorliegen einer entsprechenden Feldbeschreibung wie bereits erwähnt auch Teile dieser Feldbeschreibung bei der Bildung des Gesamt-Index indiziert werden. Damit kann dann selbst nach den in der Feldbeschreibung abgespeicherten Informationen als Suchbegriffe bzw. Informationsbegriffe gesucht werden.

Insbesondere erkennt man jedoch aus Fig. 5b den besonderen Vorteil der Dualität von Deskriptoren und Nutzdaten. Über beide kann bei Bildung des Gesamt-Index indiziert werden, so daß nach beiden gesucht werden kann.

Die Verwendung von Teilen der Feldbeschreibung bei der Bildung des Gesamt-Index, so daß über Teile der Feldbeschreibung indiziert wird, ist zwar in Fig. 5b nicht dargestellt, erfolgt jedoch ganz analog. Dabei ist noch zu erwähnen,daß bei der Bildung des Gesamt-Index nicht notwendigerweise erforderlich ist, daß für jeden Suchbegriff auch ein Deskriptor existiert, der Eintrag in der Spalte Deskriptor für einen Suchbegriff kann durchaus auch leer bleiben.

Auch sind die Informationen der UIP, die in Fig. 5b dargestellt sind, lediglich optional. Erforderlich für die Bildung des Gesamt-Index sind der Suchbegriff, die Datensatz-Nummer und Informationen über das Format bzw. die Struktur der indizierten Suchbegriffe, ggf. auch der Datensatz-Nummer. Bei der Darstellung in Fig. 5b sind diese Informationen in der Spalte UIP enthalten.

Es ist jedoch zu beachten, daß die Datenbanktabelle 510 lediglich zufällig Datensätze gleicher Struktur aufweist. Dies ist bei dem erfindungsgemäßen Datenbanksystem keinesfalls erforderlich, die Datenbanktabelle könnte durchaus Datensätze unterschiedlicher Struktur aufweisen.

In Fig. 5b wird der Gesamt-Index 520 lediglich aus den Feldinhalten (Nutzdaten und Deskriptoren) als Suchbegriffe gebildet. Daneben wird wie schon erwähnt die Satz-Nr. abgespeichert, in Fig. 5b wird noch die UIP in dieser linearen Liste abgespeichert. Die UIP enthält dabei in diesem Beispiel die Informationen über das Format von Suchbegriff, Deskriptor und Satz-Nr.

Die Suche in der Datenbank selbst erfolgt nun über die linearisierte Datenbanktabelle, d.h. über den Gesamt-Index 520. Wie dieser Gesamt-Index letztlich gebildet wird, d.h. was als Suchbegriff verwendbar sein soll, ist dabei den Wünschen des Benutzers freigestellt. Im Prinzip können sowohl der Feldinhalt selbst als auch beliebige Teile der Feldbeschreibung als Suchbegriff verwendet werden. Aufgrund der Gleichbehandlung von Feldbeschreibung und Feldinhalt können dabei im Prinzip alle Elemente der Feldbeschreibung und Feldinhalt, also z.B. auch die Länge der Nutzdaten oder deren Datenformat, als Suchbegriffe in der Liste abgespeichert werden. Ohne weiteres ist es möglich, in der Feldbeschreibung jedes Feldes Informationen darüber abzuspeichem, was nun bei der Erstellung der Liste als Suchbegriff verwendet werden soll. Die Gleichbehandlung von ggf. Teilen der Feldbeschreibung und der Feldinhalte ist dabei so zu verstehen, daß Teile der Feldbeschreibung gleichsam selbst wieder Feldinhalte bilden, die jedoch dann weder Nutzdaten noch Deskriptoren enthalten, sondern eben eine Beschreibung der Deskriptoren bzw. Nutzdaten. Diese Teile der Feldbeschreibung sind sozusagen Quasi-Feldinhalte und können bei der Indizierung, d.h. bei der Bildung des Gesamt-Index, oder aber auch bei Bildung der logischen Liste, wie die eigentlichen Feldinhalte behandelt werden, die aus Deskriptoren oder Nutzdaten bestehen. Diese "Atomisierung" der einzelnen Datenfelder in Feldinhalte bzw. Quasi-Feldinhalte ermöglicht eine wesentlich weitreichendere Verarbeitung der in den einzelnen Datensätzen abgespeicherten Daten als bei herkömmlichen Datenbanken. Sie führt zu einer Aufspaltung nicht nur der einzelnen Datensätze in Felder, sondern auch der einzelnen Felder in Feldinhalte und Feldbeschreibung, wobei die Feldbeschreibung selbst wieder aus Quasi-Feldinhalten bestehen kann. Diese Feldinhalte und Quasi-Feldinhalte werden dann bei der weiteren Verarbeitung völlig gleich behandelt. Erst durch diese Atomisierung wird es möglich, im Prinzip auf alle noch so kleinen Individualbestandteile eines Datensatzes getrennt zuzugreifen, getrennt nach ihnen zu suchen, sie getrennt zu präsentieren, zu modifizieren, etc.

Im Prinzip können dabei alle in der Feldbeschreibung enthaltenen Informationen, etwa über die Länge der Daten oder auch die Verwaltungsinformationen über die Feldinhalte als Ganzes oder auch die individuellen Feldinhalte, die UIP, etc., atomisiert und als Quasi-Feldinhalt behandelt werden. Die Feldbeschreibung könnte dann wiederum Informationen über die einzelnen Quasi-Feldinhalte enthalten, die man als Quasi-Deskriptoren der Quasi-Feldinhalte bezeichnen könnte.

Alle Informationen, die in einem Feld gespeichert sind, also nicht nur die Feldinhalte, sondern auch beliebige Teile der Feldinhalte der Feldbeschreibung können somit, sofern sie selbst wiederum durch Quasi-Deskriptoren oder auch durch eine übergeordnete Konvention definiert sind, in gleicher Weise behandelt und verarbeitet werden. Insbesondere können die derart atomisierten Bestandteile der einzelnen Felder hinsichtlich ihrer Struktur in beliebiger Weise generiert, gespeichert und modifiziert werden, und sie können auch nach Wunsch indiziert und als Suchbegriffe verwendet werden.

Die Bedingung dafür ist lediglich, daß der Datensatz als Ganzes vollständig aus sich heraus ohne Bezugnahme auf andere Datensätze definiert ist, und daß alle Teilbestandteile des Datensatzes, nicht nur die einzelnen Felder, sondern auch alle weiteren kleineren Bestandteile wie Feldinhalte oder auch Quasi-Feldinhalte ducrch die im Datensatz enthaltenen Daten selbst definiert und vollständig beschrieben sind. Diese vollständige Beschreibung bzw. Definition aller, auch der kleinsten, Bestandteile des Datensatzes geschieht bei der Erstellung des Datensatzes bzw. bei der Eingabe durch den Benutzer. Ist die Definition vollständig erstellt, kann von da ab auf den so vollständig definierten Datensatz und auf alle gemäß der Definition bzw. Beschreibung des Datensatzes festgelegten Bestandteile individuell zugegriffen werden, individuell nach ihnen gesucht werden, etc.

Aufgrund der Möglichkeit, bei der erfindungsgemäßen Datenbank Datensätze beliebiger Struktur abzuspeichem und sie auf beliebige Weise zu "atomisieren", d.h. sie bezüglich ihrer Einzelbestandteile vollständig zu definieren, ist die erfindungsgemäße Datenbank in der Lage, nicht nur alle beliebigen zukünftig auftretenden Datenstrukturen in bereits vorhandene Datenbestände zu integrieren, sondern auch beliebige neue Suchkriterien und Suchbegriffe zu erstellen.

Der Gesamt-Index wird ständig aus der unstrukturierten Datenbanktabelle generiert, d.h. er repräsentiert den momentanen Zustand der unstrukturierten Datenbank. Bei Einfügen eines neuen Datensatzes bzw. beim Ändern eines Datensatzes in der unstrukturierten Datenbank wird eine oder mehrere Einträge von Feldern aus dem Datensatz in dem Gesamt-Index erzeugt.

Der in Fig. 5b dargestellte Gesamt-Index 520 enthält neben dem Deskriptor und der Dokumenten-ID auch die Informationen über den Schutzstatus (UIP). Insbesondere sind alle Nutzdaten als Suchbegriffe in der linearen Liste enthalten, zusammen mit den zugehörigen Deskriptoren und der jeweiligen Datensatznummer.

Dadurch ergibt sich für die Suche in der Datenbank eine im Vergleich zu herkömmlichen Datenbanken vergleichsweise einfache Vorgehensweise. Bei herkömmlichen Datenbanken wird vorausgesetzt, daß folgende Informationen bekannt sind: Erstens alle potentiell in Frage kommenden Tabellen und zweitens die Datenstrukturen zu den jeweiligen Tabellen. Wird also nach einem bestimmten Nutzdatenwert gesucht, so muß man den Deskriptor oder zumindest den möglichen Deskriptor des Wertes kennen. Es ist also ein gewisses Wissen über die vorhandenen Datenstrukturen erforderlich, um z.B. nach dem Suchbegriff "Paul" zu suchen. Falls der Suchende nicht weiß, in welchen Spalten der vorhandenen Datenbanktabellen der Feldinhalt abgespeichert sein könnte, wird eine Suche unvollständig bleiben. Insbesondere kann jedoch nicht nach Deskriptoren, die "Paul" lauten, gesucht werden.

Die vergleichsweise komplizierte Suche in einer herkömmlichen Datenbank ergibt sich durch die Tabellenstruktur der Daten in herkömmlichen Datenbanken. Nachfolgend wird zunächst die Suche nach dem Suchbegriff "Paul" in einer herkömmlichen Datenbank beschrieben. Fig. 6 zeigt z.B. die Datenbanktabelle einer herkömmlichen Datenbank mit der Bezeichnung "PersonenInfo".

Bei der Suche muß man bei der herkömmlichen Datenbank zunächst wissen, in welcher Tabelle gesucht werden kann, ferner muß man angeben, in welchen Spalten (Deskriptoren) der Suchbegriff auftreten könnnte. Dies geschieht beispielsweise auf folgende Weise:
Select * from PersonenInfo where Vorname = Paul or Nachname = Paul

Würden weitere Spalten existieren, die potentiell die Information "Paul" enthalten könnten, so müßten diese ebenfalls im Selektionskommando berücksichtigt werden. Die Selektion bei konventionellen Datenbanken setzt also voraus, daß vor der Selektion folgende Informationen bekannt sind:
1. Alle potentiell in Frage kommenden Tabellen.
2. Die Datenstrukturen zu den jeweiligen Tabellen.

Dies ist jedoch nicht immer gewährleistet und schränkt damit die Suchmöglichkeiten stark ein. Soll beispielweise festgestellt werden, welche Datensätze innerhalb einer Datenbank die Information "Paul" enthalten, egal ob als Deskriptor oder als Nutzdatenwert, so ist dies ohne Kenntnis der Tabellen und Datenstrukturen mit konventionellen Datenbanken nicht möglich.

Bei dem erfindungsgemäßen Datenbank-Management-System ist jedoch die Suche wesentlich einfacher. Da jeder Feldinhalt einzeln in Verbindung mit seinem Deskriptor und seiner Datensatz-Nummer in einem einzigen Index 700 abgespeichert ist, wie aus Fig. 7 zu ersehen ist, kann bei der erfindungsgemäßen Datenbank die Suche ganz einfach mit folgendem Kommando durchgeführt werden:
Select * where Paul

Diese Suche liefert alle Datensätze, bei denen zumindest ein Datenfeld, unabhängig vom Deskriptor, den Feldinhalt Paul enthält. Insbesondere können auch die Datensätze gefunden werden, bei denen "Paul" als Deskriptor auftritt.

Damit ist keine Information über die Struktur einer Tabelle nötig, und keine Information darüber, mit welchem Deskriptor die Information "Paul" zusammen auftreten kann.

Sind solche Informationen jedoch bekannt, so können sie natürlich für die Suche zusätzlich als einschränkendes Kriterium angegeben werden. Ist beispietsweise bekannt, daß es sich bei Paul um einen Vornamen handeln muß, so kann dies bei der Suche wie folgt verwendet werden:
Select * where Vorname = Paul

Analog können auch weitere zusätzliche Kriterien verwendet werden.

Bei dem Gesamt-Index 700, wie er in Fig. 7 dargestellt ist, erkennt man, daß als Suchbegriffe nicht nur die Feldinhalte, sondern auch die Deskriptoren abgespeichert sind. So sind z.B. als Suchbegriffe auch die Datenbeschreibungen "PersonenInfo" abgespeichert, ihr Deskriptor bzw. ihre Bezeichnung lautet dabei natürlich "Tabelle". Ohne weiteres könnte man sich den Gesamt-Index 700 auch verlängert vorstellen, wobei dann z.B. auch der Deskriptor "Tabelle" selbst wieder als Suchbegriff abgespeichert sein könnte. Die UIP ist bei dem Gesamt-Index 700 in Fig. 7 nicht dargestellt. Diese Information ist jedoch auch optional. Erforderlich ist die Abspeicherung eines Suchbegriffs, eines Deskriptors für den Suchbegriff und die Abspeicherung der Datensatznummer, um den zugehörigen Datensatz auffinden zu können. Der Eintrag für den Deskriptor kann jedoch auch leer bleiben.

Damit ergibt sich bei der erfindungsgemäßen Datenbank aufgrund der zweifachen und vergleichsweise unstrukturierten Speicherung der in der Datenbasis enthaltenen Informationen sowohl eine besonders einfache Systempflege als auch besonders einfacher Zugriff auf Daten der Datenbasis.

Dies ergibt sich dadurch, daß bei jeder Speicherung eines Datensatzes das Datenbank-Management-System diesen Datensatz bezüglich seiner Struktur definiert; damit ist dann die so definierte Struktur für das Datenbank-Management-System auch in Zukunft im Falle von anderen Datensätzen mit gleicher Struktur lesbar. Es ist jedoch nicht erforderlich, daß das Datenbank-Management-System an eine übergeordnete Tabellenstruktur angepaßt ist, in der mehrere Datensätze in geordneter Weise abgespeichert sind.

Die Definition der Struktur eines neu abzuspeichemden Datensatzes kann dabei vom Benutzer selbst in einfacher Weise vorgenommen werden, so daß eine umfangreiche Systempflege nicht erforderlich ist.

Bei der vorher beschriebenen Erstellung des Gesamt-Index ist es natürlich zweckmäßig, den Gesamt-Index nach dem Suchbegriff zu sortieren, entweder alphabetisch, oder auf eine sonstige Art und Weise, so daß einfacher in der linearen Listen gesucht werden kann und schneller auf die zugehörigen Datensätze zugegriffen werden kann. Bei der Erstellung des Gesamt-Index aus der unstrukturierten Datenbanktabelle werden sinnvollerweise zumindest die Nutzdaten als Suchbegriffe in dem Gesamt-Index abgespeichert, gegebenenfalls wie bereits erwähnt auch die Deskriptoren und/oder Teile der Feldbeschreibung. Bei der Erstellung dse Gesamt-Index können durchaus auch einzelne Felder von der Aufnahme in den Gesamt-Index ausgeschlossen werden, entsprechend der in der Feldbeschreibung enthaltenen Informationen. Die tatsächliche Erstellung kann sich also nach in der Feldbeschreibung abgespeicherten Informationen, z.B. nach den in der UIP enthaltenen Informationen, richten.

Nachdem der Gesamt-Index erstellt wurde, kann dieser in Teil-Indices unterteilt werden. Dies erleichtert den Zugriff bzw. die Verwaltung bei sehr großen Datenbeständen, die unter Umständen nur teilweise von Interesse sind. Die Unterteilung ist ferner sinnvoll bei der Implementation in Client-Server-Systemen, wo auf verschiedenen Clients dann unterschiedliche Teile der Gesamiliste geladen werden. So kann dann z.B. auf einem Client der Zugriff bzw. die Suche nach kaufmännischen Daten, wie etwa Rechnungen, auf einem anderen Client die Verwaltung bzw. die Suche nach und der Zugriff auf die organisatorischen Daten wie etwa Lagerhaltung, Bestellung, etc. erfolgen. Fig. 11 zeigt eine solche Unterteilung des Gesamt-Index in Teil-Indices.

Die Unterteilung des Index ist aufgrund der beliebigen Struktur der in der beliebig strukturierten Datenbanktabelle abgespeicherten Daten unter Umständen extrem lang. Deshalb kann auch die Unterteilung in Sub-Indizes bzw. Unterlisten nach verschiedenen logischen und zeitlichen Kriterien aufgeteilt werden (z.B. Zeitspanne, Belegart, Aufbewahrungsfrist, im Falle der Tabelle aus Fig. 5). Femer kann die Liste auch unter Berücksichtigung von Zugriffszeiten oder Zugriffshäufigkeiten auf die Daten erstellt werden. Solche Informationen wären dann natürlich auch in der Feldbeschreibung der einzelnen Felder abgespeichert, etwa als Teil der UIP.

Über die Information im UIP, wann welche Suchbegriffe benutzt wurden, bzw. wann diese erstmalig angelegt wurden, evtl. im Zusammenhang damit, wer dies getan hat, ist aus dem Gesamt-Index heraus jeweils ein Teil-Index isolierbar/extrahierbar, der für einen bestimmten Anwender/Anwenderkreis die Suchbegriffe und Deskriptoren enthält, die einem ausgewählten Zeitraum über die Tatsache zugeordnet werden können, ob diese Begriffe und Deskriptoren bzw. Feldinhalte in dem angegebenen Zeitraum benutzt wurden/werden, oder darüber, ob diese Begriffe in diesem Zeitraum erstellt wurden.

Wird nun der Zeitraum verändert, so kommen neue Begriffe in diesen Teil-Index hinzu bzw. andere verlassen den Teil-Index, da sie nicht mehr zu der Menge der in dem Zeitraum benutzten oder erstellten Begriffe gehören.

Versteht man nun eine Maske für die Dateneingabe bzw. Datenrepräsentation als Menge von Tupeln aus Deskriptoren und Nutzdaten, die zu den Deskriptoren eingegeben oder angezeigt werden, so können auch die Masken über die Zuordnung der jeweils nach der Zeit benutzten Deskriptoren- bzw. Nutzdaten verwaltet werden. Die Zugriffsstrukturen, die über die Masken definiert sind, nehmen über die o.g. Tupeln an der zeitlichen Änderung teil, indem die Masken selbst als Datensätze abgespeichert werden. Damit liefern die so abgespeicherten Masken eine Sicht auf einen jeweils zur betreffenden Maske gehörenden bzw. passenden Teilbestand der Daten.

Es lassen sich also durch die Abspeicherung zeitlicher Informationen bezüglich der Suchbegriffe/Deskriptoren in der UIP sowohl die Datensätze selbst als auch die Zugriffsmasken auf die Daten in der zeitlichen Änderung verfolgen. Es kann also ein Zeitraum "von-bis" als zusätzliches einschränkendes Suchkriterium verwendet werden.

Es ist eine Eigenschaft der erfindungsgemäßen Datenbank, daß zu jedem Datensatz eine vollständige Beschreibung des Datensatzes gehört, wobei das System aus der Summe der Datensätze automatisch den Gesamt-Index generiert. Sowohl die Beschreibung des Datensatzes als auch der Datensatz selbst können jederzeit in beliebiger Weise geändert werden. Für jeden Datensatz können also immer die jeweilige Anwendersicht auf diesen Datensatz mit abgespeichert werden, indem entsprechende Informationen in der Feldbeschreibung abgespeichert werden.

Ein Beispiel für eine Eingabemaske, für einen Suchvorgang in einer erfindungsgemäßen Datenbank ist in Fig. 8 dargestellt.

Diese Eingabemaske wird, wenn ein Suchvorgang durchgeführt werden soll, auf einem Bildschirm eines Eingabegeräts angezeigt. Ein Fenster 800 enthält in einer oberen Zeile Icons BA1 bis BAn für Standardfunktionen, etwa zum Aufruf von Standard-Eingabemasken. Mit Hilfe eines linken Scroll-Fensters 610 können Deskriptoren ausgewählt werden, um die Suche einzuschränken. In einem Eingabefenster 620 ("Eingabezeile") wird der eigentliche Suchbegriff eingeben. In einem Scroll-Fenster 630 rechts werden die gefundenen Suchbegriffe aufgelistet. In einem Scroll-Fenster 640 werden die möglichen Deskriptoren für den Fall aufgelistet, daß die Suche nicht zu einem eindeutigen Ergebnis führt. Mit Hilfe eines Scroll-Fensters 650 kann ein Suchzeitraum vorgegeben werden.

Handelt es sich bei dem in der Eingabezeile eingegebenen Begriff um einen Nutzdatenwert, und wird in dem Scroll-Fenster 610 kein Deskriptor als einschränkendes Kriterium ausgewählt, so erscheinen im Fenster 640 die zu diesem Eingabewert gehörenden Deskriptoren, aus denen der Benutzer dann einen zur weiteren Einschränkung der Suche auswählen kann. Handelt es sich jedoch bei dem in der Eingabezeile 620 eingegebenen Begriff um einen Deskriptor, so erscheinen im Fenster 650 die möglichen Nutzdatenwerte, die bei verschiedenene Datensätzen und evtl. bei verschiedenen Feldern verschiedener Datensätze für diesen Deskriptor gefunden werden. In der Symmetrie dieser Maske gemäß Fig. 8 bezüglich der Suche nach Nutzdatenwerten oder Deskriptoren spiegelt sich die bereits mehrfach erwähnte Dualität von Nutzdatenwerten und zugehörigen Deskriptoren, die daraus resultiert, daß die Feldinhalte bei der Bildung des Gesamt-Index gleich behandelt werden, egal ob es sich um Nutzdaten oder um Deskriptoren handelt.

Ggf. können auch mehrere Begriffe eingegeben werden, nach denen dann gemeinsam gesucht wird. Die daraus resultierende Liste aus Eingabekriterien wird im Fenster 660 angezeigt.

In der Eingabezeile 620 wird also der Suchbegriff "Kar" eingegeben. Für den eingegebenen Suchbegriff "Kar" wurden im vorliegenden Beispiel keine passenden Deskriptoren gefunden, so daß das Fenster 650 leer bleibt. Das Fenster 630 zeigt die gefundenen Nutzdatenwerte (in der Figur etwas inkonsistent als "Feldinhalte" bezeichnet) an. Man sieht, daß keine direkter Treffer erzielt wird, da es keinen Nutzdatenwert "Kar" im Datenbestand gibt. Statt dessen werden in alphabetischer Reihenfolge die ähnlichen Nutzdatenwerte mit geichen Anfangsbuchstaben angezeigt. Bei der Eingabe kann zusätzlich zum Suchbegriff auch im Fenster 610 ein Deskriptor ausgewählt werden, um die Suche weiter einzuschränken. Wird ein solcher Deskriptor angewählt, so erscheint natürlich in Fenster 640 keine Liste von zum Suchbegriff passenden Deskriptoren.

Wird kein Deskriptor zusätzlich eingegeben, so ergibt sich keine eindeutige Zuordnung, und es erscheint als Resultat beispielsweise ein Fenster auf dem Bildschirm, wie es in Fig. 9 dargestellt ist. Es werden also Datensätze gefunden, bei denen "Karl" als Vorname, Firma oder als Pseudonym auftritt.

Der Suchvorgang ist so gestaltet, daß, wenn keine eindeutige Zuordnung möglich ist, in der Suchmaske (Fig. 8) das Fenster 640 erscheint, weiches die Deskriptoren anzeigt, unter denen der Suchbegriff gefunden wurde.

Bei der Suche mit einer Maske gemäß Fig. 8 wird beispielsweise im Falle der unstrukturierten Suche, d.h. wenn kein Deskriptor (Klassifikator) als Zusatzinformation eingeben wird, die Liste der gefundenen möglichen Deskriptoren im Fenster 640 angezeigt. Aus den gefundenen möglichen Deskriptoren kann dann der Benutzer einen auswählen, so daß eine eindeutige Zuordnung erfolgt.

Wird ein zusätzlicher Deskriptor (Klassifikator) miteingegeben, ergibt sich beispielsweise ein Resultat, wie es in Fig. 10 dargestellt ist. Dieses wird dann als Fenster auf dem Bildschirm angezeigt.

Die beschriebene Suche, aber auch die Abspeicherung eines Datensatzes, und der Zugriff auf einen bestimmten Datensatz, oder auf mehrere Datensätze, stellen jeweils eine bestimmte Anwendersicht der Datenbank dar. Solche Anwendersichten der Datenbank, d.h. die zugehörigen Eingabeformate, Ausgabeformate, etc. sind selbst wiederum Informationen, die als Datensatz in der erfindungsgemäßen Datenbank abgespeichert werden können. Das heißt, die in der Datenbank abgespeicherte Information kann sich auch auf verschiedene Anwendersichten der Datenbank durch verschiedene Benutzer und Benutzergruppen erstrecken, beziehungsweise auf verschiedene Eingabemasken oder Eingabeformate.

Die so als Datensätze abgespeicherten Eingabemasken oder Eingabeformate werden dann wieder linearisiert, so daß nach diesen selbst wiederum gesucht werden kann. Bei den verschiedenen Anwendersichten auf die Datenbank bzw. bei deren Abspeicherung können auch Informationen über die Zeit, wann die Anwendersicht benutzt wurde, mitabgespeichert werden. Mit diesen Informationen kann dann bei geeigneter Indizierung der zeitlichen Informationen bei der Suche ein Suchzeitraum vorgegeben werden, wie er im Fenster 670 von Fig. 8 dargestellt ist.

Bei der Suche werden lediglich die Anwendersichten der Datenbank gefunden, die in den ausgewählten Suchzeitraum fallen.

## Patentansprüche

1. Verfahren zur Durchführung von Operationen in einem Datenbanksystem, in dem eine Vielzahl von Datensätzen in einem Speicher eines Computers gespeichert werden, **dadurch gekennzeichnet, daß**
jeder Datensatz aus einer beliebigen Anzahl von Feldern besteht, die jeweils aus einer Feldbeschreibung als Metadaten und einem oder mehreren Feldinhalten bestehen, wobei in der Feldbeschreibung für jeden Feldinhalt ein Attribut, das den Feldinhalt beschreibt, vorgesehen ist, und
daß bei jeder Speicherung eines Datensatzes in einem Speicher eines Computers die Feldinhalte zusammen mit den zugehörigen Metadaten als ein Datensatz abgespeichert werden.

2. Verfahren nach Anspruch 1, wobei jeder Feldinhalt aus Nutzdaten oder einem Deskriptor für einen dem Deskriptor zugeordneten Feldinhalt besteht, wobei die Metadaten eines jeden Datensatzes die Struktur des jeweiligen Datensatzes zumindest bezüglich der Feldinhalte, gegebenenfalls auch bezüglich der Feldbeschreibung oder Teilen der Feldbeschreibung, vollständig definieren und weitere Verwaltungsinformationen über die Feldinhalte enthalten können.

3. Verfahren nach Anspruch 2,
**gekennzeichnet durch** die Verfahrensschritte:
Speichern der Datensätze jeweils unter einer Datensatznummer in einem Speicher,
Bilden eines Gesamt-Index über Feldinhalte von Feldern der abgespeicherten Datensätz, d. h. über aus Nutzdaten und/oder aus Deskriptoren bestehende Feldinhalte, ggf. zusätzlich über Teile der Feldbeschreibung,
Abspeichern des Gesamt-Index in einem Speicher.

4. Verfahren nach einem der vorhergehenden Ansprüche, **dadurch gekennzeichnet, daß** Feldinhalte von Feldern leer bleiben können.

5. Verfahren nach Anspruch 3, wobei ein Feld jedes Datensatzes dadurch ausgezeichnet ist, daß es als Feldinhalt eine diesen Datensatz kennzeichnende Datensatznummer enthält, und der Deskriptor lediglich des ausgezeichneten Feldes den betreffenden Feldinhalt als Datensatznummer kennzeichnet.

6. Verfahren nach Anspruch 5, das ferner folgende Schritte umfaßt:
Speichern der aus Nutzdaten bestehenden Feldinhälte von Feldern der abgespeicherten Datensätze zusammen mit den zugehörigen aus Deskriptoren bestehenden Feldinhalten, der Datensatznummer und ggf. mit einem Teil der Feldbschreibung in einer logischen Liste in einem Speicher als n-Tupel (n = 4 minimal), und
Indizieren der Liste über mindestens die aus Nutzdaten bestehenden Feldinhalte zu dem Gesamt-Index, ggf. zusätzlich über weitere Spalten der n-Tupel, insbesondere die aus Deskriptoren bestehenden Feldinhalte und/oder auch Teile der Feldbeschreibung, wobei die Feldbeschreibung Informationen über den Datentyp des Feldinhalts, über die Länge des Feldinhalts und ggf. Informationen über die Bezeichnung (Nutzdaten oder Deskriptor) des Feldinhalts enthält.

7. Verfahren nach Anspruch 6, bei dem lediglich entsprechend der Feldbeschreibung ausgezeichnete Feldinhalte und/oder Teile der Feldbeschreibung im Gesamtindex gespeichert werden.

8. Verfahren nach Anspruch 7, bei dem die Feldbeschreibung Informationen über den Schutzstatus des entsprechenden Feldes (UIP User Information Protection) enthält.

9. Verfahren nach Anspruch 7, bei dem der Gesamt-Index in Teil-Indices aufgeteilt wird.

10. Verfahren nach Anspruch 9, bei dem die Unterteilung des Gesamt-Index gemäß dem Zeitraum der Nutzung und/oder der Erstellung der Daten durch den Anwender und gegebenenfalls anwenderspezifisch erfolgt, wobei die Informationen über den Zeitraum und/oder die Erstellung und gegebenenfalls über den Anwender in der Feldbeschreibung (UIP) abgespeichert sind.

11. Verfahren zum Zugriff auf gemäß dem Verfahren nach Anspruch 3 abgespeicherte Daten, **dadurch gekennzeichnet, daß** es folgenden Schritt enthält:
Absuchen des Gesamt-Index nach vorbestimmten Suchkriterien und Auffinden des zugehörigen Datensatzes.

12. Verfahren zur Änderung gemäß dem Verfahren nach einem der Ansprüche 1 bis 10 abgespeicherter Daten, **dadurch gekennzeichnet, daß** es die folgenden Schritte enthält:
Suchen des zu verändernden Datensatzes nach vorbestimmten Suchkriterien,
Modifizieren des zu verändernden Datensatzes,
Abspeichern des modifizierten Datensatzes gemäß dem Verfahren nach einem der Ansprüche 1 bis 10.

13. Verfahren zur Anzeige von gemäß dem Verfahren nach einem der Ansprüche 1 bis 10 abgespeicherten Daten, **dadurch gekennzeichnet, daß** es die folgenden Schritte enthält:
Suchen des anzuzeigenden Datensatzes nach vorbestimmten Suchkriterien,
Anzeige von Feldern des gefundenen Datensatzes auf einem Bildschirm des Computers oder einem Drucker.

14. Verfahren nach Anspruch 13, **dadurch gekennzeichnet, daß** lediglich die Felder des Datensatzes angezeigt werden, für die gemäß den Informationen der Feldbeschreibung eine Anzeige gestattet wird.

15. Verfahren nach einem der vorhergehenden Ansprüche, bei dem Anwendersichten der Datenbank in Form der zur Erstellung, Eingabe, Suche, Modifikation und Anzeige von Daten benutzten Masken gemäß einem der Ansprüche 1 bis 10 abgespeichert werden.

16. Verfahren nach einem der vorhergehenden Ansprüche, **dadurch gekennzeichnet, daß**
bei der Indizierung, der Speicherung, der Suche, der Anzeige, der Modifikation und weiteren Verarbeitungsschritten bezüglich der Datensätze als Ganzes oder einzelner Felder die aus Nutzdaten bestehenden Feldinhalte und die aus Deskriptoren bestehenden Feldinhalte, gegebenenfalls auch die aus Quasi-Feldinhalten bestehenden Teile der Feldbeschreibung, auf die im wesentlichen gleiche Weise in einem digitalen Computer verarbeitet und gespeichert werden.

17. Verfahren nach Anspruch 9, **dadurch gekennzeichnet, daß**
die Feldbeschreibung zeitliche Informationen über die Erstellung und/oder den Zugriff auf einzelne Feldinhalte oder Teile der Feldbeschreibung enthält,
die zeitlichen Informationen zur Unterteilung des Gesamt-Index in Teil-Indices verwendet werden, wobei die Teil-Indices die Suchbegriffe und/oder die Deskriptoren enthalten, die bezüglich ihrer Erstellung und/oder ihres Zugriffs in einen vorgegebenen Zeitraum fallen.

18. Verfahren nach Anspruch 6, **dadurch gekennzeichnet, daß**
die Feldbeschreibung aus Teilbeschreibungen besteht, die als Quasi-Feldinhalte bei der Bildung des Gesamt-Index indiziert werden können.

19. Von einem digitalen Computer lesbarer Datenträger, **dadurch gekennzeichnet, daß**
auf ihm Daten gespeichert sind, die vom Computer lesbar sind und
diesen in die Lage versetzen, ein Verfahren gemäß einem der vorhergehenden Ansprüche auszuführen.

20. Computersystem zur Durchführung von Operationen in einem Datenbanksystem, in dem eine Vielzahl von Datensätzen in einem Speicher eines Computers gespeichert wird, wobei das Computersystem ein Eingabegerät (150), ein Ausgabegerät (160), eine Speichereinheit (110) mit einer darauf gespeicherten Datenbasis (120), auf die über ein Datenbank-Management-System (130) von Anwendungsprogrammen (140) aus zugegriffen werden kann, sowie eine EDV-Anlage (100) aufweist und so ausgestaltet ist, daß es ein Verfahren gemäß einem der Ansprüche 1 bis 10 ausführen kann.

## Claims

1. Method for performing operations in a database system in which a plurality of data sets are stored into a storage of a computer, **characterized by**
each data set consisting of an arbitrary number of fields, each consisting of a field description as metadata and one or more field contents, whereas in the field content there is provided for each field content an attribute describing the field content, and by that
during each storage of a data set in a storage of a computer the field contents together with the corresponding metadata are being stored as a data set.

2. Method according to claim 1, wherein each field content comprises user data or a descriptor for the field content assigned to the descriptor, whereas the metadata of each data set define the structure of the corresponding data set at least with respect to the field contents, possibly also with respect to the field description or parts of the field description, and where they may contain additional administration information about the field contents.

3. Method according to claim 2, **characterized by** the steps of:
storing the data sets each under a corresponding data set number in a storage;
forming an overall-index over field contents of fields of the stored data sets, which means over field contents consisting of user data and/or of descriptors, possibly additionally over parts of the field description;
storing the overall-index in a storage.

4. Method according to one of the preceding claims, **characterized in that** field contents of fields may remain empty.

5. Method according to claim 3, wherein a field of each data set is **characterized by** having as a field content a data set number characterizing this data set, whereas the descriptor of only the so characterized field designates the corresponding field content as data set number.

6. Method according to claim 3, further comprising the following steps:
storing the field contents consisting of user data of the stored data sets together with the corresponding field contents consisting of descriptors, with the data set number, and possibly with a part of the field description in a logical list in a memory as n-tuple (n = 4 as a minimum), and
indexing the list over at least the field contents consisting of user data to an overall-index, possibly over additional columns of the n-tuples, in particular over the field contents consisting of descriptors and/or parts of the field description, whereas the field description contains information about the data type of the field content, about the length of the field content, and possibly information about the designation (user data or descriptor) of the field content, and storing the overall-index in a storage.

7. Method according to claim 6, in which only field contents and/or parts of the field description are stored in the overall-index which are characterized as to be stored in the overall-index by the field description.

8. Method according to claim 7, in which the field description contains information about the protective status of the corresponding field (UIP user information protection).

9. Method according to claim 7, in which the overall-index is split into partial indices.

10. Method according to claim 9, in which the division of the overall-index is carried out according to the period of time of the usage and/or the generation of the data by the user, and possibly according to the person of the user, whereas the information about the time period and/or the generation and possibly about the user is stored in the field description (UIP).

11. Method for accessing data which has been stored according to claim 3, **characterized by** containing the following step:
searching the overall-index according to predefined search criteria and retrieving the corresponding data set.

12. Method for amending data which have been stored according to one of claims 1 to 10, **characterized by** containing the following steps:
searching the data set which is to be amended according to predetermined search criteria;
modifying the data set to be amended;
storing the modified data set according to the method of one of claims 1 to 10.

13. Method for displaying data which has been stored according to the method of one of claims 1 to 10, **characterized by** containing the following steps:
searching the data set to be displayed according to predetermined search criteria;
displaying of fields of the found data set on the display of the computer or on a printer.

14. Method according to claim 13, **characterized in that** only the fields of the data set are displayed for which a display is allowed according to the information in the field description (UIP).

15. Method according to one of the preceding claims, wherein views of the database in form of the mask used for the generation, input, search, modification, and the display of data, are stored according to one of claims 1 to 10.

16. Method according to one of the preceding claims, **characterized in that**
during indexing, storing, searching, displaying, modifying, and during further processing steps with respect to the data sets as a whole or with respect to individual fields, the field contents consisting of user data and the field contents consisting of descriptors, possibly also the parts of the field description consisting of quasi-field contents, being processed and stored in a digital computer in substantially the same manner.

17. Method according to claim 9, **characterized in that**
the field description contains temporal information about the generation and/or the access onto individual field contents or parts of the field description;
the temporal information is used for the division of the overall-index into partial indices, whereas the partial indices contain the search terms and/or the descriptors which with respect to their creation time and/or their access time fall into a predetermined period of time.

18. Method according to claim 6, **characterized in that**
the field description consists of partial descriptions which may be indexed as quasi-field contents during the formation of the overall-index.

19. Computer-readable data carrier, **characterized in that**
data are stored on said data carrier which are computer-readable and which enable the computer to carry out a method according to one of the preceding claims.

20. Computer system for performing operations in a database system in which a plurality of data sets are stored in a storage of a computer, whereas the computer system comprises an input device (150), an output device (160), a storage device (110) with a database (120) stored thereon which may be accessed by means of a database management system (130) through application programs (140), and a data processing system (100) being configured such that it is capable of carrying out a method according to one of claims 1 to 10.

## Revendications

1. Procédé d'exécution d'opérations dans un système de banque de données, dans lequel une pluralité de jeux de données sont stockés dans une mémoire d'un ordinateur, **caractérisé en ce que**
chaque jeu de données est composé d'un nombre quelconque de champs, lesquels sont composés respectivement d'une description de champ en tant que métadonnées et d'un ou de plusieurs contenus de champ, un attribut, décrivant le contenu de champ, étant prévu dans la description de champ pour chaque contenu de champ et
**en ce que**, lors de chaque stockage d'un jeu de données dans une mémoire d'un ordinateur, les contenus de champ sont stockés ensemble avec les métadonnées correspondantes en tant que jeu de données.

2. Procédé selon la revendication 1, dans lequel chaque contenu de champ est composé de données utiles ou d'un descripteur pour un contenu de champ affecté au descripteur, les métadonnées de chaque jeu de données définissant totalement la structure du jeu de données respectif au moins sur le plan des contenus de champ, le cas échéant aussi sur le plan de la description de champ ou de parties de la description de champ, et pouvant contenir d'autres informations de gestion concernant les contenus de champ.

3. Procédé selon la revendication 2,
**caractérisé par** les étapes de procédé consistant à :
stocker les jeux de données respectivement sous un numéro de jeu de données dans une mémoire,
constituer un index global répertoriant des contenus de champ de champs des jeux de données stockés, c'est-à-dire répertoriant des contenus de champ composés de données utiles et/ou de descripteurs, répertoriant aussi le cas échéant des parties de la description de champ,
stocker l'index global dans une mémoire.

4. Procédé selon l'une des revendications précédentes, **caractérisé en ce que** les contenus de champ de champs peuvent rester vides.

5. Procédé selon la revendication 3, dans lequel un champ de chaque jeu de données se distingue par le fait qu'il contient comme contenu de champ un numéro de jeu de données caractérisant ce jeu de données, et dans lequel le descripteur uniquement du champ distingué caractérise le contenu de champ concerné en tant que numéro de jeu de données.

6. Procédé selon la revendication 5, comprenant en outre les étapes suivantes consistant à :
stocker les contenus de champ, composés de données utiles, de champs des jeux de données stockés, ensemble avec les contenus de champ correspondants composés de descripteurs, les numéros de jeux de données et, le cas échéant, avec une partie de la description de champ dans une liste logique dans une mémoire en tant que n tuples (n = 4 minimum), et
indexer la liste, en répertoriant au moins les contenus de champ composés de données utiles, liste rattachée à l'index global, en répertoriant aussi le cas échéant d'autres colonnes des n tuples, en particulier les contenus de champ composés de descripteurs et/ou également des parties de la description de champ, la description de champ contenant des informations sur le type de données du contenu de champ, sur la longueur du contenu de champ et, le cas échéant, des informations sur la désignation (données utiles ou descripteur) du contenu de champ.

7. Procédé selon la revendication 6, dans lequel sont stockés dans l'index global uniquement les contenus de champ distingués en fonction de la description de champ et/ou les parties de la description de champ.

8. Procédé selon la revendication 7, dans lequel la description de champ contient des informations sur le statut de protection du champ correspondant (UIP User Information Protection).

9. Procédé selon la revendication 7, dans lequel l'index global est partagé en indices partiels.

10. Procédé selon la revendication 9, dans lequel la subdivision de l'indice global en fonction de la période d'utilisation et/ou de l'établissement des données est effectuée par l'utilisateur et, le cas échéant, de manière spécifique à l'utilisateur, les informations concernant la période et/ou l'établissement et, le cas échéant, concernant l'utilisateur, étant stockées dans la description de champ (UIP).

11. Procédé d'accès à des données stockées conformément au procédé selon la revendication 3, **caractérisé en ce qu'**il comprend l'étape suivante :
scrutage de l'indice global en fonction de critères de recherche prédéterminés et localisation du jeu de données correspondant.

12. Procédé de modification de données stockées conformément au procédé selon l'une des revendications 1 à 10, **caractérisé en ce qu'**il comprend les étapes suivantes :
recherche du jeu de données à modifier en fonction de critères de recherche prédéterminés,
modification du jeu de données à modifier,
stockage du jeu de données modifié conformément au procédé selon l'une des revendications 1 à 10.

13. Procédé d'affichage de données stockées conformément au procédé selon l'une des revendications 1 à 10, **caractérisé en ce qu'**il comprend les étapes suivantes :
recherche du jeu de données à afficher en fonction de critères de recherche prédéterminés,
affichage de champs du jeu de données trouvé sur un écran de l'ordinateur ou sur une imprimante.

14. Procédé selon la revendication 13, **caractérisé en ce que** sont affichés uniquement les champs du jeu de données pour lesquels un affichage est autorisé conformément aux informations de la description de champ.

15. Procédé selon l'une des revendications précédentes, dans lequel des vues utilisateur de la banque de données sous forme des masques utilisés pour l'établissement, l'entrée, la recherche, la modification et l'affichage de données sont stockées selon l'une des revendications 1 à 10.

16. Procédé selon l'une des revendications précédentes, **caractérisé en ce que**
lors de l'indexage, du stockage, de la recherche, de l'affichage, de la modification et autres étapes de traitement portant sur les jeux de données en tant que tout ou sur les champs individuels, les contenus de champ composés de données utiles et les contenus de champ composés de descripteurs, le cas échéant également les parties de la description de champ composées de quasi-contenus de champ, sont traités et stockés dans un ordinateur numérique de manière essentiellement identique.

17. Procédé selon la revendication 9, **caractérisé en ce que**
la description de champ contient des informations temporelles sur l'établissement de et/ou l'accès à des contenus de champ individuels ou à des parties de la description de champ,
les informations temporelles sont utilisées pour la subdivision de l'indice global en indices partiels, les indices partiels contenant les termes de recherche et/ou les descripteurs qui relèvent d'une période spécifiée sur le plan de leur établissement et/ou de leur accès.

18. Procédé selon la revendication 6, **caractérisé en ce que**
la description de champ se compose de descriptions partielles qui peuvent être indexées en tant que quasi-contenus de champ lors de la constitution de l'indice global.

19. Support de données lisible par un ordinateur numérique, **caractérisé en ce que**
peuvent y être stockées des données qui sont lisibles par l'ordinateur et mettent celui-ci en mesure de réaliser un procédé selon l'une des revendications précédentes.

20. Système informatique pour l'exécution d'opérations dans un système de banques de données, dans lequel une pluralité de jeux de données sont stockés dans une mémoire d'un ordinateur, le système informatique comprenant un appareil d'entrée (150), un appareil de sortie (160), une unité de mémoire (110) avec une base de données (120) stockée dessus, à laquelle on peut accéder par l'intermédiaire d'un système de gestion de banques de données (130) à partir de programmes d'applications (140), ainsi qu'un matériel informatique (100), et étant arrangé de manière à pouvoir réaliser un procédé selon l'une des revendications 1 à 10.
